# EUROPÄISCHE PATENTSCHRIFT

(11) **EP 1 062 868 B1**
(45) Veröffentlichungstag und Bekanntmachung des Hinweises auf die Patenterteilung: **08.03.2006**
(21) Anmeldenummer: 99112052.8
(22) Anmeldetag: 22.06.1999
(51) Int. Cl.: A01K 1/01

(54) **Sanitäreinrichtung für Tiere und Betriebsverfahren für eine Sanitäreinrichtung für Tiere**
Pet toilet and method for operating a pet toilet
Appareil sanitaire pour animaux et son mode de fonctionnement

(43) Veröffentlichungstag der Anmeldung: 27.12.2000
(73) Patentinhaber: Schönholzer, Robert, 8055 Zürich (CH)
(72) Erfinder: Schönholzer, Robert, 8055 Zürich (CH)
(74) Vertreter: Schubert, Siegmar

(56) Entgegenhaltungen:
- EP-A- 0 209 474
- EP-A- 0 721 731
- WO-A-97/17837
- WO-A-98/01374
- DE-U- 8 900 398
- US-A- 5 113 801

## Beschreibung

Die Erfindung betrifft eine Sanitäreinrichtung für Tiere nach dem Oberbegriff des Anspruchs 1 sowie ein Betriebsverfahren für eine Sanitäreinrichtung für Tiere nach dem Oberbegriff des Anspruchs 26.

Die Zahl von Haustieren ist in letzter Zeit enorm gestiegen, wobei dies insbesondere beispielsweise für Katzen gilt, die ausschließlich in geschlossenen Wohneinheiten leben, da es Katzen nichts ausmacht, wenn man sie vorübergehend alleine in einer Wohnung läßt.

Sanitäreinrichtungen für Tiere dienen grundsätzlich der Hygiene bei der Haustierhaltung. Solche Sanitäreinrichtungen, wie z.B. Katzentoiletten, sind seit Jahren bekannt und im Handel in vielfachen Ausgestaltungen erhältlich.

In einer einfachsten, in der Praxis bekannt gewordenen Form, bestehen sie aus einfachen Plastikwannen, die in der Regel einen schmalen, abnehmbaren Rand haben und in die ein Streumaterial einzufüllen ist, das flüssigkeits- und möglichst auch geruchsbindend ist. Zusätzlich zu einer solchen einfachen Plastikwanne kann ein beispielsweise transparentes oder teil-transparentes, abnehmbares Oberteil vorgesehen sein, das zusammen mit der Wanne einen bis auf eine Eingangsöffnung rundum geschlossenen Behälter bildet. Seit einiger Zeit gibt es z.B. für Katzentoiletten auswechselbare Einlagen mit fertig portioniertem Streumaterial.

Nachteilig bei solchen bekannten Sanitäreinrichtungen für Tiere ist, daß es bisher noch nicht geglückt ist, in wünschenswertem Maß geruchsbindendes Streumaterial zu entwickeln, so daß eine Geruchsbelästigung durch Freisetzung unangenehmer Gerüche nach jeder Benutzung einer solchen Sanitäreinrichtung, wie z.B. einer Katzentoilette, nicht in gewünschtem oder ausreichendem Umfang vermieden wird.

Ein weiterer Nachteil der vorstehend beschriebenen, herkömmlichen, bisher auf dem Markt angebotenen Katzentoiletten oder allgemein Sanitäreinrichtungen für Tiere ist, daß diese nach einer Benutzung von Hand gereinigt oder geleert werden müssen, auch in dem Fall, daß eine auswechselbare Einlage mit vorportioniertem Streumaterial verwendet wird. Das Entfernen und Wegwerfen von benutztem Streumaterial ist sowohl aus hygienischen Gründen, als auch wegen dem Sauberkeitsbedürfnis z.B. der Katzen möglichst nach jeder Benutzung erforderlich. Solche Arbeiten sind jedoch nicht nur unangenehm, sondern beinhalten auch die Gefahr, daß die Person, die solche Arbeiten ausführt, sich selbst oder die Umgebung dabei verschmutzt.

Weiterhin wird mit solchen Sanitäreinrichtungen für Tiere eine relativ große Menge Abfall erzeugt, da beim Reinigen der komplette Inhalt an Streumaterial weggeworfen wird, obwohl nur ein geringer Anteil für die Fäkalienaufnahme verbraucht wurde. Zwar gibt es die Möglichkeit, von Hand oder mit entsprechendem Werkzeug Tierfäkalien und verbrauchtes Streumaterial gesondert aus dem noch ungenutztem Streumaterial zu entfernen, jedoch sind solche Arbeiten äußerst unangenehm, so daß diese Vorgehensweise nicht weit verbreitet ist.

Aus den vorstehenden Gründen und deshalb, weil z.B. Katzen, die man durchaus vorübergehend alleine in einer Wohnung lassen kann, äußerst reinlich sind, wurden selbstreinigende Sanitäreinrichtungen für Tiere entwickelt, die auch bei einer längeren Abwesenheit eines Besitzers eines Haustiers grundsätzlich die Gefahr vermeiden, daß das Haustier, wenn ihm die Sanitäreinrichtung nicht mehr als sauber genug erscheint, sein Geschäft an einem anderen, ihm hierfür geeignet erscheinendem Platz in der Wohnung erledigt.

Lediglich als Beispiel für solche Sanitäreinrichtungen, die automatische Reinigungseinrichtungen enthalten, wird der sich automatisch selbstreinigende Streubehälter für Katzen angegeben, der in der EP 0 721 231 A1 offenbart ist. Dieser Behälter enthält als eine Aufnahmeschicht für Tierfäkalien eine Schicht Katzenstreu. Wird diese Sanitäreinrichtung von einer Katze benutzt, so verklumpt das Katzenstreu teilweise durch die Aufnahme von Flüssigkeit aus den Ausscheidungen der Katze. In dem Behälter sind Sensoren angebracht, mittels denen eine Steuerung feststellt, daß die Katze nach einer möglichen Benutzung den Behälter wieder verlassen hat. Die Steuerung sorgt dann dafür, daß nach Ablauf einer vorgegebenen Wartezeit ein Reinigungsautomatismus gestartet wird. Die Reinigung erfolgt dadurch, daß ein Kamm oder Rechen durch das Katzenstreu bewegt wird und dabei die entstandenen Klumpen mitnimmt und in einen Entsorgungsbehälter schiebt.

Nachteilig bei solchen Sanitäreinrichtungen ist, daß ein Verbrauchsmaterial benötigt wird, das die Flüssigkeiten aus den Tierfäkalien aufnimmt. Der Einsatz eines solchen Verbrauchsmaterials ist wirtschaftlich aufwendig, erfordert Anstrengungen bei der Beschaffung und Entsorgung und führt zu Umweltbelastungen bei der Herstellung des Streumaterials sowie bei der Entsorgung der Überreste davon. Im übrigen bestehen im wesentlichen dieselben Nachteile auf Grund des Streumaterials, wie sie bereits weiter oben bei einfachen Sanitäreinrichtungen für Tiere ohne Selbstreinigungsmerkmale angegeben wurden.

In einer bekannten Sanitäreinrichtung für Hunde und Katzen, welche die Merkmale gemäß dem Oberbegriff des Anspruchs 1 aufweist, wird als Aufnahmeschicht für Tierfäkalien eine Schütte aus physiologischem Granulat verwendet (EP-A-0 209 474). Ein solches übliches physiologisches Granulat nimmt Flüssigkeit auf und verklumpt bei dieser Flüssigkeitsaufnahme. Dementsprechend ist am Ausgang der Entwicklung eine Mühle vorgesehen, welche das Material der Schütte nach Benutzung der Einrichtung bei einem Ausspülvorgang mahlt. Die Schütte wird nach Benutzung der Sanitäreinrichtung durch ein Tier nicht gereinigt, um an Ort und Stelle wiederverwendet zu werden, sondern herausgespült, wonach eine frische Schütte aufgebracht wird.

Zur Reinigung der Sanitäreinrichtung sind ausschließlich Spüleinrichtungen vorgesehen, die ein vertikales Rohr mit einem unteren Winkelstück umfassen, welches um die Rohrachse in Drehung versetzt wird. Hierzu ist ein gesonderter Antrieb mit einem Schwenkarm vorgesehen. Dieses Rohr spült in Verbindung mit einer getrennt dehnbaren Düseneinrichtung, die auf die Seitenwände einwirkt, die Sanitäreinrichtung nach Benutzung lediglich aus.

Es ist das Ziel der Erfindung, eine Sanitäreinrichtung für Tiere sowie ein Betriebsverfahren für eine Sanitäreinrichtung für Tiere anzugeben, um eine kostengünstige und unaufwendige sowie möglichst hygienische und umweltschonende Sanitärversorgung von Haustieren zu ermöglichen.

Dieses Ziel wird jeweils mit einer Sanitäreinrichtung für Tiere nach dem Anspruch 1 sowie einem Betriebsverfahren für eine Sanitäreinrichtung für Tiere nach dem Anspruch 26 erreicht.

Vorrichtungsmäßig sind bei einer Sanitäreinrichtung für Tiere gemäß der Erfindung eine Aufnahmeschicht für Tierfäkalien vorgesehen wobei die Aufnahmescnicht für Tierfäkalien eine Matte mit einer genoppten Oberfläche enthält, die aus einem Material besteht, das keine Flüssigkeit aufnimmt. Die automatischen Reinigungseinrichtungen der Sanitäreinrichtung weisen außer den bekannten Spüleinrichtungen zur Abgabe einer Spülflüssigkeit auf die Aufnahmeschicht für Tierfäkalien, Abräumeinrichtüngen zum Entfernen von auf bzw, in der Aufnahmeschicht für Tierfäkalien enthalten Fäkalien aufweisenn, die Düseneinrichtüngen enthalten, durch welche eine Reinigungsflüssigkeit auf die Aufnahmeschicht für Tierfäkalien gesprüht werden kann, um diese Aufnahmeschicht für Tierfäkalien von letzteren zu reinigen, die mittels eines Schlittens oder Wagens und eines Antriebs über die Aufnahmeschicht für Tierfäkalien beweglich sind.

Im Gegensatz zu herkömmlichen Tiertoiletten ist für die erfindungsgemäße Sanitäreinrichtung für Tiere kein flüssigkeitsaufnehmendes und verklumpendes Streumaterial erforderlich. Dadurch werden die entsprechenden Aufwendungen sowohl finanzieller Art, als auch an Tätigkeiten und Umweltschutzmaßnahmen eingespart.

Insbesondere besteht ein Vorteil der erfindungsgemäßen Sanitäreinrichtung für Tiere darin, daß damit kein Sondermüll erzeugt wird oder selbst gegenüber der Verwendung von biologisch abbaubarem herkömmlichen Streumaterial eine wesentlich geringere Menge an Verbrauchsmaterial eingesetzt und entsorgt werden muß, da Lediglich die Tierfäkalien selbst sowie die Spül- oder Reinigungsflüssigkeit entsorgt werden müssen, was im Gegensatz zu flüssigkeitsbindendem Streumaterial z.B. über herkömmliche Toiletten erfolgen kann.

Durch die Erfindung wird aber auch noch der weitere Vorteil erreicht, daß eine gründlichere Reinigung der Sanitäreinrichtung möglich ist, als in dem Fall, in dem flussigkeitsaufnehmendes Streumaterial verwendet wird. Bei flüssigkeitsaufnehmendem Straumaterial kann nämlich nicht ausgeschlossen werden daß der Verklumpungsprozeß nicht so vollständig abläuft, daß sich Klumpen aus Streumaterial mit einer Größe bilden, die zuverlässig von dem Kamm oder Rechen, der beispielsweise bei dem Stand der Technik nach der EP 0 721 231 A1 verwendet wird, mitgenommen werden kann. Das heißt, daß auch nach der automatischen Selbstreinigung solches Streumaterial in dem Behälter verbleiben kann, das bereits Fäkalienflüssigkeit des Tiers aufgenommen hat. Eine völlige Bindung der Gerüche von Tierfäkalien in einem solchen flüssigkeitsaufnehmenden Streumaterial wird aber in der Praxis, wie bereits weiter oben erläutert wurde, nicht erreicht werden. Werden eben Teile des Streumaterials, die Tierfäkalien gebunden haben, bei der Reinigungsaktion nicht aus dem Behälter entfernt, so führen sie zu einer Geruchtsbelästigung einerseits des Tiers, das dann womöglich die Sanitäreinrichtung nicht mehr benutzen will, und andererseits der Umwelt.

Bei der erfindungsgemäßen Sanitäreinrichtung kann eine Reinigung in einer solchen Weise durchgeführt werden, die ausschließt, daß Fäkalienrückstände mit einer Geruchsbelästigung auf oder in der Aufnahmeschicht für Tierfäkalien zurückbleiben. Neben dem Wegfall einer Geruchsbelästigung führt dies auch dazu, daß nicht befürchtet werden muß, daß Haustiere einen anderen Ort als die Sanitäreinrichtung aufsuchen werden, so daß auch keine entsprechenden Schäden und/oder Reinigungsarbeiten an solchen Orten befürchtet werden müssen.

Indem die automatischen Reinigungseinrichtungen der Sanitäreinrichtung für Tiere Abräumeinrichtungen zum Entfernen von auf/in der Aufnahmeschicht für Tierfäkalien enthaltenen Fäkalienfeststoffen aufweisen, müssen festere Bestandteile der Tierfäkalien nicht ausschließlich mittels der Spülflüssigkeit entfernt werden, sondern sie werden bereits mechanisch weggeräumt. Bevorzugt enthalten die Abräumeinrichtungen nach Anspruch 15 Bürsteneinrichtungen, die einen Zahn/-Bürstenabstand und eine Zahn-/Bürstenanordnung haben, die auf eine genoppte Oberfläche der Matte der Aufnahmeschicht für Tierfäkalien abgestimmt sind. Damit wird eine möglichst optimale Reinigungs- und Abräumwirkung erhalten. Die Abräumeinrichtungen sind insbesondere über einen ortsfesten Antrieb über die Aufnahmeschicht für Tierfäkalien beweglich ausgestattet. Ein ortsfester Antrieb hat den Vorteil, daß keine Energie dafür aufgewandt werden muß, daß die Masse des Antriebs durch ihn selbst bewegt werden muß, und daß die Bauart des Antriebs nicht auf räumliche Gegebenheiten des Bewegungsweges des Räumvorganges abgestimmt werden muß. Ein ortsfester Antrieb kann ferner hinsichtlich seines Energieverbrauchs sowie seiner Bauart optimal gewählt werden.

Die Düseneinrichtungen der Sanitäreinrichtung sind bevorzugt vertikal über der Aufnahmeschicht für Tierfäkalien angeordnet. Als Reinigungsflüssigkeit kann beispielsweise Wasser verwendet werden, dem unter Umständen Zusätze für eine bessere Reinigungswirkung und/oder Schadstoff -/Geruchsbindung oder zur Abtötung von Krankheitserregern beigefügt sein können.

Die Flüssigkeitszufuhreinrichtungen der Spüleinrichtungen können einen Flüssigkeitstank, Pumpen- und Freigabeeinrichtungen enthalten. Besonders bevorzugt ist es, wenn der Flüssigkeitstank von der übrigen Sanitäreinrichtung abnehmbar ist, da dadurch das Füllen des Flüssigkeitstanks besonders einfach vorgenommen werden kann. Die Pumpeneinrichtungen dienen, dazu, die Flüssigkeit, wie z.B. Wasser, aus dem Flüssigkeitstank zu den Düseneinrichtungen zu befördern. Dabei kann ein entsprechender Flüssigkeitsdruck ständig oder nur bei Bedarf bereitgestellt werden. Ein solcher Flüssigkeitsdruck muß nicht zwingend oder nicht ausschließlich durch Pumpeneinrichtungen erzeugt werden. Es kann auch vorgesehen sein, daß Gravitationskräfte genutzt werden, wie es beispielsweise der Fall ist, wenn der Flüssigkeitstank oberhalb der Düseneinrichtungen angeordnet ist. Der Betrieb der Spüleinrichtungen läßt sich besonders einfach und genau mit Freigabeeinrichtungen, wie beispielsweise geeigneten Ventilen, steuern, die den zeitlichen Verlauf und/oder die örtliche Verteilung eines Spülvorgangs auch hinsichtlich gewünschter Spülintensitäten ermöglichen.

Es ist ferner von Vorteil, wenn die Spüleinrichtungen abschaltbar sind. Zwar ist grundsätzlich vorgesehen, die erfindungsgemäße Sanitäreinrichtung ohne flüssigkeitsaufnehmendes Streumaterial zu verwenden, jedoch kann es z.B. im Falle einer Erkrankung des Tieres in der Art etwa, daß es Durchfall hat, vorteilhaft sein, wenn zeitweise solches flüssigkeitsbindendes oder -aufnehmendes Streumaterial eingesetzt werden kann, ohne deshalb eine weitere Sanitäreinrichtung anschaffen oder bevorraten zu müssen. Bei Verwendung von flüssigkeitsbindendem oder -aufnehmendem Streumaterial würde der automatische Einsatz der Spüleinrichtungen bei einem Reinigungsvorgang dazu führen, daß das gesamte flüssigkeitsaufnehmende Streumaterial durch das Spülen oder Besprühen mit Wasser oder einer anderen Flüssigkeit unbrauchbar würde.

Gemäß einer weiteren vorzugsweisen Ausgestaltung der Sanitäreinrichtung nach der Erfindung können die automatischen Reinigungseinrichtungen Lüftungs- und/oder Trocknungsgebläseeinrichtungen enthalten, die bevorzugt oberhalb der Aufnahmeschicht für Tierfäkalien und insbesondere vertikal über der Aufnahmeschicht für Tierfäkalien angeordnet sind. Solche Gebläseeinrichtungen können einerseits dafür sorgen, daß die Aufnahmeschicht rasch wieder trocken ist, nachdem sie mit einer Flüssigkeit gespült wurde, so daß das Tier, für welches die Sanitäreinrichtung gedacht ist, schon bald wieder eine saubere und trockene Umgebung zur Verrichtung seiner Notdurft vorfindet. Andererseits ermöglichen solche Gebläseeinrichtungen bei entsprechend geeigneter Ausgestaltung, daß evtl. geruchsbelastete Luft innerhalb der Sanitäreinrichtungen entfernt, wie abgesaugt oder verdrängt, wird, wobei es vorzuziehen ist, daß solche Luft dann durch entsprechende Filtereinrichtungen nach außerhalb der Sanitäreinrichtung gebracht wird. Außer Filtereinrichtungen können zu diesem Zweck aber auch Lufterfrischer oder andere Luftreinigungseinrichtungen zum Einsatz kommen.

Je nachdem, welche der vorstehend angegebenen Weiterbildungen der Erfindungen realisiert sind, ist es zusätzlich bevorzugt, die Spüleinrichtungen sowie deren Düseneinrichtungen, die Flüssigkeitszufuhreinrichtungen, deren Flüssigkeitstank Pumpen- und Freigabeeinrichtungen und/oder die Lüftungs- und/oder Trocknungsgebläseeinrichtungen einem oberhalb der Aufnahmeschicht für Tierfäkalien angeordneten Oberteil der Sanitäreinrichtungen für Tiere zuzuordnen. Dabei ist es weiterhin bevorzugt, wenn dieses Oberteil abnehmbar ist. Dadurch kann einerseits ein Raum geschaffen werden, in dem ein Tier ungestört seine Notdurft verrichten kann und andererseits wird durch einen solchen abgeschlossenen Raum selbst eine geringe Belästigung der Umgebung durch die Tierausscheidungen vermieden. So besteht durch einen solchen abgeschlossenen Raum nicht die Gefahr, daß spielende Kleinkinder ein Tier bei seiner Notdurftverrichtung in der Sanitäreinrichtung stören oder vor deren Reinigung ohne weiteres mit Tierfäkalien in Berührung kommen können. Weiterhin läßt sich die Sanitäreinrichtung für Tiere mit einem solchen Oberteil auch zu einer Transporteinrichtung umfunktionieren, beispielsweise dann, wenn ein Eingang in eine derart mit einem Oberteil ausgestattete Sanitäreinrichtung verschlossen werden kann. Es ist dann möglich, ein Tier in bzw. mit der Sanitäreinrichtung sicher zu transportieren. Dadurch wird zusätzlich vermieden, daß neben einem Transportbehälter noch gesondert eine Tiertoilette mitgenommen werden muß, wenn das Tier verreisen oder beispielsweise nur zum Tierarzt gebracht werden soll.

In weiterer vorzugsweiser Ausgestaltung der Erfindung kann vorgesehen sein, daß die Aufnahmeschicht für Tierfäkalien flüssigkeitsdurchlässig und auf einer Unterlage angeordnet ist, die Flüssigkeitsdurchlässe enthält, und daß unterhalb der Unterlage ein Auffangbehälter für Flüssigkeit enthalten ist. Eine solche Ausgestaltung erleichtert die Ableitung der Flüssigkeit und die Vermeidung jeglicher Belästigung durch die Flüssigkeit. Dabei ist die Aufnahmeschicht für Tierfäkalien die Matte mit der genoppten Oberfläche und gegebenenfalls das Granulat. Eine derart gestaltete Aufnahmeschicht bietet nicht nur einem Tier eine Oberfläche, auf der es sich wohl fühlen kann und die artgerecht ist, sondern ermöglicht ferner eine ausreichende und zuverlässige Reinigung. Zusätzlich kann zwischen der Unterlage und dem Auffangbehälter eine Flüssigkeitsableiteinrichtung vorgesehen sein, die so gestaltet ist, daß sie Flüssigkeit von jedem Ort der Unterlage zu wenigstens einem in der Flüssigkeitsableiteinrichtung enthaltenen Ablaß leitet, der in den Auffangbehälter mündet. Der Ablaß kann eine Abdeckung des Auffangbehälters bilden. Durch diese Ausgestaltung der Erfindung kann zuverlässig dafür gesorgt werden, daß die Spül- oder Reinigungsflüssigkeit sicher und vollständig abgeleitet und dem Auffangbehälter zugeführt wird.

Zur Handhabung des Auffangbehälters ist es ferner von Vorteil, wenn er als Schublade ausgebildet ist, da dadurch ein einfaches Entleeren des Auffangbehälters ermöglicht wird.

Weiterhin kann bei den vorstehenden Ausführungsvarianten der Erfindung vorgesehen sein, daß die Aufnahmeschicht für Tierfäkalien, die Unterlage der Auffangbehälter sowie die Flüssigkeitsableiteinrichtung einem Unterteil der Sanitäreinrichtung für Tiere zugeordnet sind. Die Gestaltung der Sanitäreinrichtung mit einem Unterteil hat zumindest im wesentlichen dieselben Vorteile, die bereits oben im Zusammenhang mit einem Oberteil angegeben wurden.

Eine vorteilhafte Weiterbildung im Zusammenhang mit den Abräumeinrichtungen besteht darin, daß letzteren für die von/aus der Aufnahmeschicht für Tierfäkalien entfernten Fäkalien ein Sammelbehälter zugeordnet ist. Dabei ist, daß ein solcher Sammelbehälter durch wenigstens eine Klappe und insbesondere zwei hintereinander geschaltete Klappen verschlossen, deren Öffnung vorzugsweise an den Betrieb der Abräumeinrichtungen gekoppelt ist, wobei mit Vorzug die Kämm- oder Bürsteinrichtungen mechanisch mit der wenigstens einen Klappe zu deren Öffnung in Eingriff kommen. Mit denselben Vorteilen, wie sie bereits im Zusammenhang weiter oben für die Auffangbehälter für Flüssigkeit angegeben wurden, kann der Sammelbehälter als Schublade ausgebildet sind.

Die Sanitäreinrichtung für Tiere nach der vorliegenden Erfindung kann ferner dadurch weitergebildet werden, daß die Reinigungseinrichtungen eine Steuerung enthalten, im die Abräumeinrichtungen die Spüleinrichtungen, und ggf. die Lüftungs- und/oder Trocknungsgebläseeinrichtungen in Abhängigkeit vom Abschluß einer Benutzung der Sanitäreinrichtung durch ein Tier auszulösen und zu steuern. Dabei ist es von besonderem Vorteil, wenn die Steuerung Sensoren zum Erfassen eines Aufenthalts eines Tieres auf/in der Sanitäreinrichtung enthält und derart ist, daß sie erfaßt, wenn ein Tier die Sanitäreinrichtung verläßt. Gemäß einer vorzugsweisen Weiterbildung davon löst eine solche Steuerung nur die Spüleinrichtungen oder aber die Abräumeinrictttungen und anschließend die Spüleinrichtungen und abschließend die Lüftungs- und/oder Trocknungsgebläseeinrichtungen mit einer Zeitverzögerung aus, nach dem ein Tier die Sanitäreinrichtungen verlassen hat. Es ist im vorliegenden Fall in der Regal nicht erforderlich, abzuwarten, bis flüssigkeitsaufnehmendes Streumaterial verklumpt ist, da solches Streumaterial auße,r in krankheitsbedingten Ausnahmefällen nicht zum Einsatz kommt, sondern ist die Zeitverzögerung bis zum Start eines Reinigungsvorgangs so bemessen, daß sichergestellt ist, daß das Tier die Sanitäreinrichtung zuverlässig verlassen und sich davon entfernt hat. Vorzugsweise kann mittels der Steuerung ein Betreten der oder Eintreten in die Sanitäreinrichtung nach Beginn der Steuerung durch Vornehmen geeigneter Absperrmaßnahmen unterbunden werden. Bevorzugt ist die Steuerung derart ausgelegt, daß sie einen laufenden Reinigungsvorgang unterbricht, wenn ein Aufenthalt eines Tieres auf/in der Sanitäreinrichtung oder auf der Aufnahmeschicht festgestellt wird.

Zusätzlich kann eine solche Steuerung im Rahmen der vorliegenden Erfindung, wie bereits weiter oben erläutert wurde, derart ausgestaltet sein; daß sie für einen solchen Fall, in dem herkömmliches flüssigkeitsaufnehmendes Streumaterial verwendet wird, weil das Tier erkrankt ist, auf einen entsprechenden Betriebsmodus umgeschaltet werden kann, in dem der Notwendigkeit, daß sich das verwendete Streumaterial nach der Benutzung vor einem Abräumen verklumpen muß, Rechnung getragen wird bezüglich der Zeitverzögerung für eine Auslösung eines Abräumvorganges. Weiterhin kann mit einer geeigneten Steuerung auch anderen Bedürfnissen Rechnung getragen werden. So ist es beispielsweise möglich, eine manuelle Auslösung eines von eventuell mehreren verschiedenen Reinigungsvorgängen- mittels der Steuerung vorzusehen. Auch kann die Steuerung geeignet ausgestattet sein, um verschiedene Reinigungsprogramme und/oder -modi auslösen und durchführen zu können, wie z.B. Grundreinigungsprogramme, Schnellreinigungsprogramme, Intensivreinigungsprogramme, etc.

Weitere bevorzugte Merkmale der Steuerung sind Sensoren und/oder Anzeigeeinrichtungen zum Feststellen bzw. Anzeigen wenigstens eines Füllzustandes des Auffangbehälters und/oder des Sammelbehälters.

Verfahrensmäßig wird das weiter oben genannte Ziel der Erfindung mittels eines Betriebsverfahrens für eine Sanitäreinrichtung für Tiere gemäß Ansprüch 26 erreicht, wobei nach einer Benutzung der Sanitäreinrichtung durch ein Tier eine automatische Reinigung erfolgt.

Die Wirkungen und Vorteile, die mit einem solchen Betriebsverfahren, dessen Ausgestaltungen und Weiterbildungen erzielt werden, sind jeweils entsprechend dieselben wie jene, die weiter oben im Zusammenhang mit der erfindungsgemäßen Sanitäreinrichtung für Tiere angegeben wurden.

In Ausgestaltung des erfindungsgemäßen Betriebsverfahrens für eine Sanitäreinrichtung für Tiere wird erfaßt, wenn ein Tier die Sanitäreinrichtung verlassen hat, und es wird insbesondere mit einer Zeitverzögerung danach die automatisch Reinigung ausgeführt. Im einzelnen umfaßt die automatische Reinigung in der Regel ein Abräumen von Tierfäkalien und anschließendes Spülen und abschließendes Lüften und/oder Trocknen der Aufnahmeschicht.

Nur wahlweise alternativ besteht die automatische Reinigung nur aus einem Spülen der Aufnahmeschicht für Tierfäkalien.

Bei dem Betriebs- oder Reinigungsverfahren ist vorzugsweise ferner vorgesehen, daß ein Flüssigkeitstank für die Reinigungsflüssigkeit zur Füllung abgenommen, gefüllt und wieder angebracht werden kann von/an der übrigen Sanitäreinrichtung, wobei bevorzugt wenigstens ein Füllzustand des Flüssigkeitstanks überwacht wird.

Eine bevorzugte Weiterbildung des Betriebsverfahrens für eine Sanitäreinrichtung für Tiere gemäß der Erfindung besteht darin, daß Flüssigkeiten durch die Aufnahmeschicht für Tierfäkalien hindurch vorzugsweise mittels einer Flüssigkeitsableiteinrichtung in einen Auffangbehälter geleitet werden. Weiterhin kann vorgesehen sein, daß feste Fäkalienteile mittels Abräumeinrichtungen in einen Sammelbehälter geräumt werden. Bei jeder dieser Weiterbildungen ist es ferner bevorzugt, wenn wenigstens ein Füllzustand des Auffangbehälters und/oder des Sammelbehälters überwacht und insbesondere angezeigt wird.

Das Betriebsverfahren für eine Sanitäreinrichtung für Tiere gemäß der Erfindung kann auch dadurch weitergebildet werden, daß Tierfäkalien durch Entnahme und Ausleeren von Schubladenartigen Behältern, wie eines Auffangbehälters für flüssige Fäkalien und Reinigungsflüssigkeit und/oder eines Sammelbehälters für feste Fäkalienteile entfernt werden können. Zusätzlich kann vorgesehen sein, daß bei festgestelltem Unwohlsein des Tiers, für das die Sanitäreinrichtung dient, herkömmliches flüssigkeitsaufnehmendes Streu oder Granulat verwendet wird, das bei Flüssigkeitsaufnahme aus den Fäkalien verklumpt, und dadurch entstandene Klumpen beim Abräumen entfernt werden. Im letzteren Fall ist für das Betriebsverfahren vorgesehen, daß das Spülen abgeschaltet oder ein Betriebsmodus ohne Spülen ausgeführt wird.

Im Rahmen der Erfindung Können weitere Verfahrensausgestaltungen aus den Offenbarungen im Zusammenhang mit den Vorrichtungsmerkmalen der erfindungsgemäßen Sanitäreinrichtung für Tiere übernommen werden.

Zu den Merkmalen, Vorteilen und Ausgestaltungsgmölichkeiten der Erfindung wird weiter auf die nachfolgende Beschreibung und die Zeichnung Bezüg genommen.

Die Erfindung wird nachfolgend zum weiteren Verständnis anhand von Ausführungsbeispielen unter Bezugnahme auf die Zeichnung näher erläutert: In der Zeichnung stellen dar:
- Fig. 1: eine auseinandergezogene schematische Darstellung mit einzelnen Teilen eines Ausführungsbeispiels einer erfindungsgemäßen Sanitäreinrichtung für Tiere,
- Fig. 2: eine perspektivische Schemaansicht des Ausführungsbeispiels aus der Fig. 1 in einem zusammengebauten Zustand,
- Fig. 3: eine schematische Längsschnittansicht des Ausführungsbeispiels einer Sanitäreinrichtung für Tiere aus den Fig. 1 und 2, und
- Fig. 4: eine schematische Querschnittansicht des Ausführungsbeispiels einer Sanitäreinrichtung für Tiere nach den Fig. 1 bis 3.

In den einzelnen Abbildungen der Zeichnung sind gleiche oder ähnliche oder gleich oder ähnlich wirkende Teile oder Baugruppen mit denselben Bezugszeichen versehen. Dadurch und durch die Art der Darstellung erschließen sich dem Fachmann solche Teile oder Baugruppen und deren Wirkungen und Funktionen bezüglich einzelner Darstellungen auch dann, wenn hierauf nachfolgend nicht im einzelnen eingegangen wird. Ferner können Angaben im folgenden Text dadurch die Darstellungen in der Zeichnung auch dann zugeordnet werden, wenn keine gesonderten Bezugszeichen verwendet werden bzw. enthalten sind. Ferner erlauben die vergleichende Betrachtung der einzelnen Figuren aufgrund deren Darstellungen sowie die Einzelheiten der Abbildungen eine eindeutige Zuordnung von Teilen und Merkmalen, auch wenn diese nicht in jeder Figur mit Bezugszeichen gekennzeichnet sein sollten.

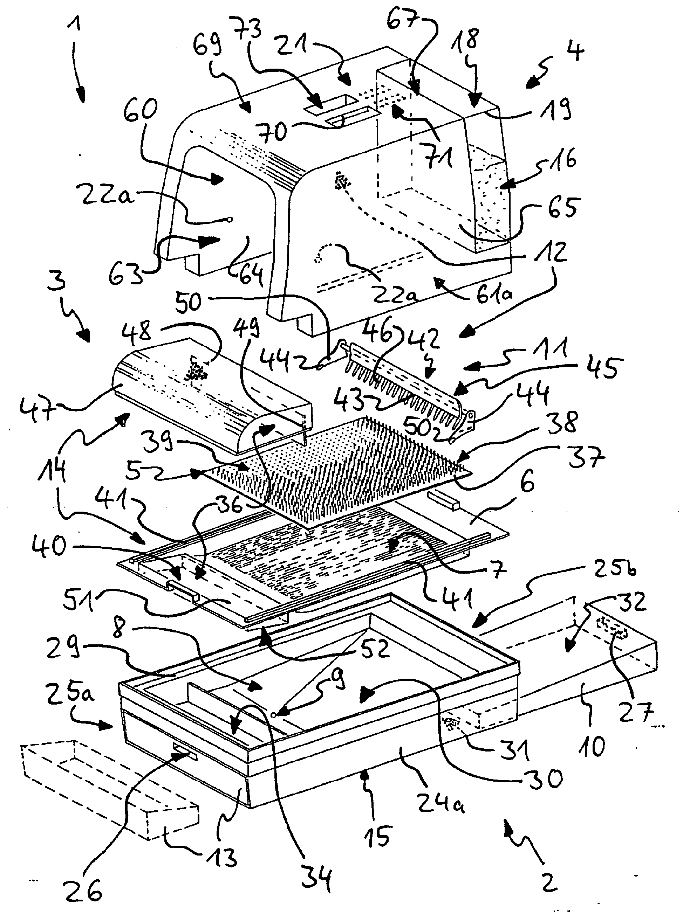

Ein Ausführungsbeispiel der Sanitäreinrichtung 1 für Tiere ist in den Fig. 1 bis 4 gezeigt. Lediglich exemplarisch handelt es sich dabei um eine Katzentoilette 2, wobei aber die Sanitäreinrichtung 1 und insbesondere das in den Figuren dargestellte Ausführungsbeispiel im Rahmen der Erfindung auch für andere Tiere geeignet ausgeführt werden kann, die an eine Verrichtung ihrer Geschäfte an einem speziellen Ort gewöhnt werden können. Insbesondere können entsprechende Sanitäreinrichtungen im Rahmen der Erfindung in tierspezifischen Größen und Gestaltungen vorgesehen werden.

Die Katzentoilette 2 des in den Figuren 1 bis 4 gezeigten Ausführungsbeispiels einer Sanitäreinrichtung 1 für Tiere enthält grundsätzlich ein Unterteil 3 und ein Oberteil 4, das abnehmbar auf das Unterteil 3 aufgesetzt ist.

Das Unterteil 3 enthält eine Aufnahmeschicht 5 für Tierfäkalien, eine Unterlage 6, auf der die Aufnahmeschicht 5 angeordnet ist und die Flüssigkeitsdurchlässe 7 enthält, eine Flüssigkeitsableiteinrichtung 8 mit einem Ablaß 9, einen Auffangbehälter 10 für Flüssigkeit, Abräumeinrichtungen 11, die Bestandteil von automatischen Reinigungseinrichtungen 12 der Sanitäreinrichtung 1 für Tiere sind, einen Sammelbehälter 13 für Tierfäkalien, Zugangseinrichtungen 14 zu dem Sammelbehälter 13 sowie ein Grundgehäuse 15.

In dem Oberteil 4 der Katzentoilette 2 sind Spüleinrichtungen 16 mit Düseneinrichtungen 17 und Flüssigkeitszufuhreinrichtungen 18 integriert, die einen vom übrigen Oberteil abnehmbaren Flüssigkeitstank 19 sowie Pumpen- und Freigabeeinrichtungen 20 aufweisen. Ferner weist das Oberteil 4 Lüftungs- und/oder Trocknungsgebläseeinrichtungen 21 auf.

Die Reinigungseinrichtungen 12 verfügen über eine Steuerung 22, die ganz oder teilweise in dem Unterteil 3 und/oder dem Oberteil 4 untergebracht ist, wobei geeignete Verbindungen (nicht gezeigt) zur Kopplung von Teilen der Steuerung 22 in dem Unterteil 3 einerseits und dem Oberteil 4 andererseits oder zur Kopplung von zu steuernden Komponenten im Unterteil 3 oder Oberteil 4 mit einer vollständig im Oberteil 4 bzw. Unterteil 3 angeordneten Steuerung 22 vorgesehen sind. Derartige Verbindungen liegen im Rahmen des fachmännischen Wissens und üblicher Praktiken, so daß hier nicht näher darauf eingegangen wird. Da das Oberteil 4 vom Unterteil 3 abnehmbar ist, sind diese, wie z.B. insbesondere elektrischen, hydraulische oder mechanische Verbindungen (nicht gezeigt), lösbar gestaltet.

Das Grundgehäuse 15 des Unterteils 3 der Katzentoilette 2 ist kastenartig und in der Draufsicht rechteckig. Das Grundgehäuse 15 weist eine Grundplatte 23 sowie zwei Längsseitenwände 24a und 24b auf. An den Schmalseiten 25a und 25b ist das Grundgehäuse 15 offen, so daß auf der Schmalseite 25a der Sammelbehälter 13 und auf der Schmalseite 25b der Auffangbehälter 10 in das Grundgehäuse 15 eingeschoben werden können. Der Sammelbehälter 13 und der Auffangbehälter 10 sind entsprechend als Schubläden ausgebildet, die zu ihrer Betätigung Griffeinrichtungen 26 bzw. 27 enthalten. Gegenüberliegend der Grundplatte 23 ist das Grundgehäuse 15 mit der Flüssigkeitsableiteinrichtung 8 versehen, die das Grundgehäuse 15 nach oben abschließt. Die Längsseitenwände 24a und 24b, die Grundplatte 23 und die Flüssigkeitsableiteinrichtung 8 des Grundgehäuses 15 können integral ausgebildet oder aus Einzelteilen eventuell zerlegbar hergestellt sein. Von besonderem Vorteil ist es, wenn die Flüssigkeitsableiteinrichtung 8 gegenüber den übrigen Teilen des Grundgehäuses 15 abnehmbar ist, um gelegentliche Reinigungen des Grundgehäuses 15 oder Maßnahmen bei einem Klemmen oder einer anderen Störung von Auffangbehälter 10 und/oder Sammelbehälter 13 auf einfache Weise vornehmen zu können.

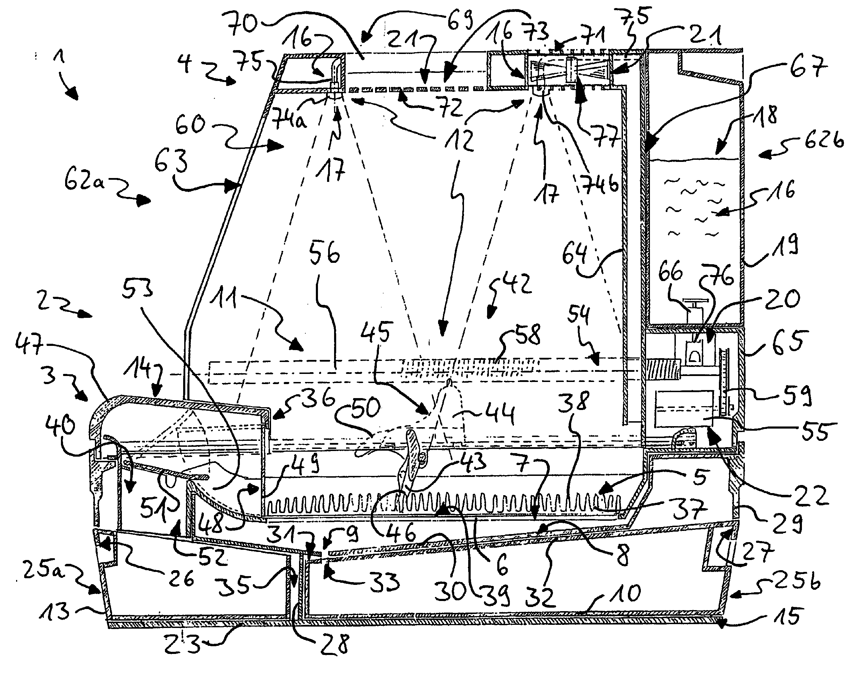

Das Grundgehäuse 15 muß nicht notwendigerweise Öffnungen (nicht bezeichnet) an den Schmalseiten 25a und 25b zum Einführen von Auffangbehälter 10 und Sammelbehälter 13 aufweisen. Entsprechende Öffnungen können auch in den Längsseitenwänden 24a und/oder 24b vorgesehen sein. In einem solchen Fall können auch an den Schmalseiten 25a und/oder 25b entsprechend Wände (nicht gezeigt) das Grundgehäuse 15 komplettieren. Die Längsseitenwände 24a und 24b sowie eventuell Wände an den Schmalseiten 25a und/oder 25b müssen nicht vollflächig ausgebildet sein; es genügt, wenn hier Stützen und/oder Rahmen vorhanden sind, um einerseits den Auffangbehälter 10 und den Sammelbehälter 13 einführen und erforderlichenfalls führen zu können, und um die Flüssigkeitsableiteinrichtung 8 oberhalb von Auffangbehälter 10 und Sammelbehälter 13 abzustützen. Auch die Grundplatte 23 muß nicht vollflächig ausgebildet sein; Leisten oder Schienen zum Halten und Führen von Auffangbehälter 10 und Sammelbehälter 13 sowie erforderlichenfalls Versteifen des Grundgehäuses 15 können ausreichend sein. In der Längsschnittdarstellung der Fig. 3 ist ferner ein Steg 28 zu erkennen, der über die Querausdehnung der Grundgehäuses 15 von der Grundplatte 23 nach oben verläuft, so daß sich die Flüssigkeitsableiteinrichtung 8 darauf abstützt. Statt des Steges 28 können aber auch jegliche anderen geeigneten Maßnahmen realisiert sein, um die Positionierung der Flüssigkeitsableiteinrichtung 8 sicherzustellen. Insgesamt ergeben die Gestaltungsmöglichkeiten der einzelnen Komponenten des Grundgehäuses 15 die Möglichkeiten, besonders leichtgewichtige oder stabile Versionen der Katzentoilette 2 oder Mischformen daraus zu realisieren.

Die Flüssigkeitsableiteinriehtung 8 enthält einen Rahmen 29 zur Auflage auf den Längsseitenwänden 24a und 24b. Zur Erhöhung der Stabilität könnte das Grundgehäuse 15 auch über Verbindungsleisten zwischen den jeweils einander gegenüberliegenden Enden der Längsseitenwände 24a und 24b oberhalb von Einführöffnungen (nicht bezeichnet) für den Auffangbehälter 10 und den Sammelbehälter 13 aufweisen, so daß sich der Rahmen 29 der Flüssigkeitseinrichtung 8 auch auf solchen Leisten (nicht gezeigt) abstützen könnte. Innerhalb des Rahmens 29 ist zumindest in dem Bereich, der oberhalb eines in das Grundgehäuse 15 eingeführten Auffangbehälters 10 liegt, eine Ableitplatte 30 enthalten. Im vorliegenden Ausführungsbeispiel erstreckt sich die Ableitplatte 30 noch bis etwa über die Hälfte des Bereiches des Grundgehäuses 15, in dem der Sammelbehälter 13 aufgenommen werden kann. Die Ableitplatte 30 ist so gestaltet, daß sie vom sie umgebenden Rahmen 29 und ihrem über einem Aufnahmeraum 35 für den Sammelbehälter 13 in dem Grundgehäuse 15 liegenden Ende zum Ablaß 9 hin abfällt, der, wenn das Grundgehäuse 15 mit seiner Grundplatte 23 zumindest im wesentlichen eben auf einem Boden steht, die tiefste Stelle der Arbeitsplatte 30 darstellt. Dadurch wird jegliche Flüssigkeit, die auf die Ableitplatte 30 trifft, wenn das Grundgehäuse 15 mit seiner Grundplatte 23 zumindest im wesentlichen eben auf einem Boden steht, zwangsweise zum Ablaß 9 fließen. Im vorliegenden Ausführungsbeispiel ist der Ablaß 9, wie die Längsschnittdarstellung in der Fig. 3 zeigt, einfach durch eine Öffnung an der tiefsten Stelle der Ableitplatte 30 gebildet.

Innerhalb des Grundgehäuses 15 ist ferner ein Aufnahmeraum 31 für den Auffangbehälter 10 gebildet, der kastenförmig geschlossen ist und in seiner Oberseite 32 eine Einlaßöffnung 33 aufweist, die mit dem Ablaß 9 ausgerichtet ist, wenn der Auffangbehälter 10 vollständig in seinem Aufnahmeraum 31 eingesetzt oder eingeschoben ist.

Die Oberseite 32 des Auffangbehälters 10 kann bei dem vorliegenden Ausführungsbeispiel geöffnet werden, um ein Entleeren des Auffangbehälters 10 zu erleichtern. Grundsätzlich ist es aber auch möglich, daß der Auffangbehälter 10 nur über die Einlaßöffnung 33 entleert werden kann. Alternativ können aber auch andere insbesondere ein Entleeren und ggf. Reinigen des Auffangbehälters 10 erleichternde Möglichkeiten und Maßnahmen vorgesehen bzw. getroffen sein. Der Auffangbehälter 10 ist deshalb geschlossen, um das Entweichen von Gerüchen möglichst zu verhindern. Es kann eine geeignete Verbindung (nicht gezeigt) zwischen dem Ablaß 9 der Flüssigkeitsableiteinrichtung 8 und der Einlaßöffnung 33 in der Oberseite 32 des Auffangbehälters oder -schubes 10 vorgesehen sein, um die Flüssigkeitsableitung von der Flüssigkeitsableiteinrichtung 8 zuverlässig und vollständig in den Auffangbehälter 10 zu gewährleisten. Eine solche Verbindung (nicht gezeigt) kann auch siphonartige Einrichtungen (nicht gezeigt) enthalten, so daß durch eine Flüssigkeitssäule in einer solchen Verbindung eine vollständige Abdichtung von der Flüssigkeitsableiteinrichtung 8 zum Inneren des Auffangbehälters 10 und dessen Aufnahmeraum 31 erreicht wird, wie es heute bei Toiletten für Menschen üblich ist. Zwischen dem Ablaß 9 der Flüssigkeitsableiteinrichtung 8 und der Einlaßöffnung 33 in den Auffangbehälter 10 können aber auch nur einfache Dichteinrichtungen (nicht gezeigt) vorgesehen sein, um einen Flüssigkeitsablauf in den Aufnahmebehälter 10 hinein sicherzustellen. Zwischen dem Auffangbehälter 10 und dem Grundgehäuse 15 können auf der Schmalseite 25b ebenfalls Dichtungseinrichtungen (nicht gezeigt), z.B. aus Gummi, angeordnet sein, so daß eine insbesondere zumindest im wesentlichen geruchsdichte Abdichtung zwischen dem Grundgehäuse 15 und dem Auffangbehälter 10 realisiert ist. Besonders bevorzugt kann eine solche Abdichtung beispielsweise mittels sogenanntem Magnetgummis erreicht werden, wie sie heutzutage bei Kühlschränken üblich ist. Solche Magnetgummis können paarweise oder mit gegenüberliegenden dünnen Metallstreifen einerseits an dem Auffangbehälter 10 und andererseits an dem Grundgehäuse 15 angeordnet werden.

In der Flüssigkeitsableiteinrichtung 8 ist innerhalb des Rahmens 29 im von der Ableitplatte 30 freigelassenen Bereich eine Abwurföffnung 34 gebildet, die oberhalb des in seinen Aufnahmeraum 35 im Grundgehäuse 15 vollständig eingeschobenen Sammelbehälters 13 liegt, wenn das Grundgehäuse 15 mit seiner Grundplatte 23 zumindest weitgehend eben auf dem Boden steht. Eine Abdichtung (nicht gezeigt) des in seinen Aufnahmeraum 35 eingesetzten oder eingeschobenen Sammelbehälters 13 nach au-ßerhalb des Grundgehäuses 15 hin kann in der selben Weise erreicht werden, wie es vorstehend für den Auffangbehälter 10 angegeben wurde. Die Abdichtung des oben offenen Sammelbehälters oder -schubes 13 und seines Aufnahmeraums 35 durch die Abwurföffnung 34 in der Flüssigkeitsableiteinrichtung 8 erfolgt durch einen Klappenmechanismus 36, der in den Zugangseinrichtungen 14 enthalten ist. Die nähere Beschreibung des Klappenmechanismus 36 erfolgt wegen funktionaler Zusammenhänge weiter unten bei der Befassung mit den Abräumeinrichtungen 11.

Das Unterteil 3 der Katzentoilette 2 enthält ferner die Aufnahmeschicht 5 und deren Unterlage 6. Bei dem Ausführungsbeispiel, das in den Fig. 1 bis 4 gezeigt ist, ist als Aufnahmeschicht 5 eine Matte 37 mit einer genoppten Oberfläche vorgesehen. Diese Matte 37 wird derart verwendet, daß ihre genoppte Oberfläche die Seite der Matte 37 ist, auf die ein die Sanitäreinrichtung 1 benutzendes Tier sein Geschäft verrichtet. Dies bedeutet, daß Tierfäkalien direkt auf die Noppen 38 der Matte 37 abgegeben werden. Das Material und die Ausgestaltung der Noppen 38 können so gewählt werden, daß einerseits eine für das Tier, für das die Sanitäreinrichtung verwendet werden soll, möglichst angenehme Oberfläche geschaffen ist, und andererseits Tierfäkalien möglichst wenig oder gar nicht daran haften bleiben. Wesentlich ist für die Aufnahmeschicht 5, daß das Material der Matte 37 derart ist, daß es möglichst keine Flüssigkeit aufnimmt. Eine Flüssigkeitsaufnahme ist nämlich Üblicherweise mit einem Aufquellen des Materials verbunden, was einem gewünschten Betrieb der Sanitäreinrichtung 1 für Tiere entgegenwirken würde, da dadurch ein optimaler Flüssigkeitsablauf in den Auffangbehälter 10 und damit eine Beseitigung von unangenehm riechenden Tierfäkalien nicht mehr im erforderlichen Umfang möglich wäre.

Bei Verwendung der, Matte 37 als Aufnahmeschicht 5 muß dafür gesorgt werden, daß auf die Aufnahmeschicht 5 abgegebene flüssigkeit hindurchfliessen kann, weshalb die Matte 37 mit Durchlaßlöchern 39 (siehe insbesondere Fig. 1, wo teilweise die Noppen 38 nicht dargestellt sind, um die Durchlaßlöcher 39 zu zeigen) zwischen den Noppen 38 versehen ist. Die Gestaltung der Noppen 38 und der Durchlaßlöcher 39 kann derart sein, daß auf die Matte 37 abgegebene Flüssigkeit automatisch und zuverlässig in und durch die Durchlaßlöcher 39 fließt.

Um die Aufnahmeschicht 5 in jedweder Form zuverlässig über dem Grundgehäuse 15 zu halten, enthält das Unterteil 3 der Katzentoilette 2 eine Unterlage 6. Diese Unterlage 6 kann auf den Rahmen 29 der Flüssigkeitsableiteinrichtung 8 aufgelegt werden. In dem Bereich der Unterlage 6, der, wenn letzere auf die Flüssigkeitsableiteinrichtung 8 aufgesetzt ist, über der Ableitplatte 30 liegt, weist die Unterlage 6 Flüssigkeitsdurchlässe 7 auf, so daß Flüssigkeit, die auf die Noppen 38 der Matte 37 abgegeben wurde, durch die Durchlaßlöcher 39 der letzteren und dann die Flüssigkeitsdurchlässe 7 der Unterlage 6 auf die Ableitplatte 30 der Flüssigkeitsableiteinrichtung 8 gelangt. Die Flüssigkeitsdurchlässe 7 in der Unterlage 6 können beispielsweise durch Schlitze im Material gebildet sein, wodurch eine Ausrichtung mit den Durchlaßlöchern 39 der Matte 37 mit einer gewissen Toleranz ermöglicht ist. Alternativ kann auch vorgesehen sein, daß die Matte 37 nur in exakt einer Position auf die Unterlage 6 aufgelegt werden kann, in der die Flüssigkeitsdurchlässe 7 dann durch Löcher gebildet sein können, die mit den Durchlaßlöchern 39 in der Matte 37 ausgerichtet sind. Eine besonders einfache Möglichkeit zur Realisierung der Flüssigkeitsdurchlässe 7 mit einer sehr großen Toleranz hinsichtlich der Lage der Matte 37 und damit deren Durchlaßlöcher kann dadurch erreicht werden, daß die Flüssigkeitsdurchlässe 7 durch ein Gitter in der Unterlage 6 realisiert sind.

Die Unterlage 6 weist ferner eine Abräumöffnung 40 auf, die, wenn die Unterlage 6 auf die Flüssigkeitsableiteinrichtung 8 richtig aufgelegt ist, mit der Abwurföffnung 34 in letzterer ausgerichtet ist. Sowohl die Abräumöffnung 40 in der Unterlage 6, als auch die Abwurföffnung 34 in der Flüssigkeitsableiteinrichtung 8 erstrecken sich zumindest im wesentlichen über die gesamte Breite der Schmalseite 25a des Grundgehäuses 15. Dasselbe gilt auch für die Matte 37. Zwischen der Unterlage 6 und der Flüssigkeitsableiteinrichtung 8 sowie zwischen letzterer und anderen Teilen des Grundgehäuses 15 können Dichtungen (nicht gezeigt), wie z.B. Gummidichtungen, vorgesehen sein, so daß ein Austreten unangenehmer Gerüche aus dem soweit zusammengesetzten Unterteil 3 der Katzentoilette 2 vermieden wird.

Weiterhin weist die Unterlage 6 parallel zu den Längsseitenwänden 24a und 24b des Grundgehäuses 15 Führungsschienen 41 für die Abräumeinrichtungen 11 auf. Die in dem vorliegenden Ausführungsbeispiel eingesetzten Abräumeinrichtungen 11 enthalten Kämm- oder Bürsteinrichtungen 42, wie sie insbesondere in der perspektivischen Darstellung der Fig. 1 zu sehen sind. Die Kämm- oder Bürsteinrichtungen enthalten einen Kamm 43, der an jedem seiner beiden Enden schwenkbar mit einem Haltesteg 44 verbunden ist, wodurch ein Schlitten oder Wagen 45 gebildet ist. Die Haltestege 44 sind derart auf die Führungsschienen 41 aufsetzbar, daß der Schlitten oder Wagen 45 längs der Führungsschienen 41 zumindest im wesentlichen über die gesamte Längsausdehnung der Längsseitenwände 24a und 24b des Grundgehäuses 15 verschiebbar ist. Die Anordnung der Haltestege 44 relativ zum Kamm 43 ist derart, daß Zähne 46 des Kamms 43 bei einem Verschieben des Schlittens oder Wagens 46 längs der Führungsschienen 41 im Bereich der Matte 37 zwischen deren Noppen 38 hindurchgeführt werden. Wird der Schlitten oder Wagen 45 vom auffangbehälterseitigem Ende des Unterteils 3 der Katzentoilette 2 zum sammelbehälterseitigem Ende dieses Unterteils 3 über die Matte 37 bewegt, so werden die Zähne 46 des Kamms oder Rechens 43 auf und zwischen den Noppen 38 der Matte 37 liegende Feststoffe, wie z.B. Kot von Tieren, zur Abräumöffnung 40 der Unterlage 6 mitnehmen. Dadurch können feste Teile, die auf die Aufnahmeschicht 5 abgegeben wurden, durch die Kämm- oder Bürsteinrichtungen 42 von der Aufnahmeschicht 5 in die Abräumöffnung 40 der Unterlage 6 geschoben werden, so daß solche festen Stoffe dann durch die Abwurföffnung 34 in den Sammelbehälter 13 im Grundgehäuse 15 fallen.

Die Abräumeinrichtungen 11 enthalten ferner den Klappenmechanismus 36, der zum möglichst geruchsdichten Abdichten der Abräumöffnung 40 in der Unterlage 6 dient. Der Klappenmechanismus 36 ist in eine Abdeckkappe 47 integriert, die über der Abräumöffnung 40 der Unterlage 6 sitzt. Die Abdeckkappe 47 deckt die Abräumöffnung 40 der Unterlage 6 zumindest soweit ab, daß ein Tier, für das die Sanitäreinrichtung 1 bestimmt ist, die Abräumöffnung 40 gefahr- und problemlos überqueren kann bzw. wird, um die Aufnahmeschicht 5 zu betreten. Bei dem zur Verdeutlichung der vorliegenden Erfindung hier behandelten Ausführungsbeispiel deckt die Abdeckkappe 47 die Abräumöffnung 40 in der Unterlage 6 vollständig ab, wie in den Fig. 1 und 3 gut zu erkennen ist.

Die Abdeckkappe 47 kann zur einfachen und genauen Positionierung auf der Unterlage 6 relativ zu deren Abräumöffnung 40 auf den Führungsschienen 41 aufgesetzt werden. Die Abdeckkappe 47 weist, wenn sie auf die Unterlage 6 geeignet aufgesetzt ist, zur Matte 37 hin eine Öffnung 48 auf und schließt im übrigen die Abräumöffnung 40 der Unterlage 6 vollständig ab.

Eine erste Klappe 49 ist derart verschwenkbar in der Abdeckkappe 47 angebracht, daß sie zwischen einer Verschlußstellung, in der sie die Öffnung 48 der Abdeckkappe 47 gegenüber letzterer und der Unterlage 6 abschließt und die in der Fig. 3 gezeigt ist, und einer Offenstellung verschwenkbar ist, die in der Fig. 3 gestrichelt eingezeichnet ist. Die Haltestege 44 des Schlittens oder Wagens 45 der Kämm- oder Bürsteinrichtungen 42 weisen zur ersten Klappe 49 hin, wenn die Abdeckkappe 47 auf die Unterlage 6 aufgesetzt ist, jeweils einen Dorn 50 auf, der bei Annäherung des Schlittens oder Wagens 45 an die erste Klappe 49 letztere in die Abdeckkappe 47 hinein verschwenkt. Dadurch wird während der Vorwärtsbewegung des Schlittens oder Wagens 45 zur Abräumöffnung 40 der Unterlage 6 hin die erste Klappe 49 des Klappenmechanismus 36 automatisch geöffnet. Für die erste Klappe 49 können, wie auch im Zusammenhang mit dem Auffangbehälter 10 und dem Sammelbehälter 13 geschildert wurde, Dichteinrichtungen (nicht gezeigt) vorgesehen sein, um eine zumindest weitgehende Abdichtung gegen einen Austritt unangenehmer Gerüche aus dem Sammelbehälter 13 zu erreichen.

Der Klappenmechanismus 36 enthält ferner eine zweite Klappe 51, die derart in der Abdeckkappe 47 angeordnet ist, daß sie beim Verschwenken der ersten Klappe 49 aus ihrer Verschlußstellung in die Offenstellung automatisch mitgenommen und dadurch geöffnet wird. Die zweite Klappe 51 ist dadurch zwischen einer Verschlußstellung, die in der Fig. 3 eingezeichnet ist, und einer Offenstellung, die in der Fig. 3 gestrichelt eingezeichnet ist, verschwenkbar. In ihrer Verschlußstellung deckt die zweite Klappe 51 einen Zugang 52 zur Abräumöffnung 40 innerhalb der Abdeckkappe 47 ab. Auch für die zweite Klappe 51 können Dichteinrichtungen (nicht gezeigt) in ähnlicher Weise, wie für die erste Klappe 49 vorgesehen sein.

Innerhalb der Abdeckkappe 47 ist ferner eine Auflauframpe 53 (siehe Fig. 3) für den Kamm 43 vorgesehen. Diese Auflauframpe 53 dient dazu, daß, wenn der Schlitten oder Wagen 45 sich bis zur Abdeckkappe 47 bewegt hat und sich dann weiterbewegt, wobei zunächst die erste Klappe 49 mittels der Dorne 50 der Haltestege 44 des Schlittens oder Wagens 45 aufgedrückt wird, wodurch in der vorher geschilderten Weise auch die zweite Klappe 51 geöffnet wird, der Kamm 43 mit den freien Enden seiner Zähne 46 nach oben verschwenkt wird. Dies wird dadurch ermöglicht, daß, wie bereits oben im Zusammenhang mit dem Schlitten oder Wagen 45 erläutert wurde, der Kamm 43 gegenüber den Haltestegen 44 verschwenkbar ist. Wenn bei der Vorwärtsbewegung des Wagens oder Schlittens 45 zur Abdeckkappe 47 hin der Kamm 43 über das Ende der Auflauframpe 53 hinaus verschoben wird, schwenkt der Kamm 43 automatisch wieder so, daß seine Zähne 46 abwärts gerichtet sind, so daß von dem Kamm 43 mitgeführte Festkörper zuverlässig in den Zugang 52 fallen. Wird der Schlitten oder Wagen 45 danach wieder von der Abdeckkappe 47 zum der letzteren entgegengesetzt liegenden Ende der Matte 37 bewegt, so schließen sich die beiden Klappen 49 und 51 automatisch wieder.

Indem der Schlitten oder Wagen 45 von dem der Abdeckkappe 47 entgegengesetzt liegenden Ende der Matte 37 aus einer Ausgangs- oder Warteposition längs den Führungsschienen 41 den Kamm 43 mit seinen Zähnen zwischen den Noppen 38 der Matte 37 hindurch zur Abdeckkappe 47 bewegt wird, werden Feststoffe, wie Tierkot, von der Matte 37 entfernt. Bei Erreichen der Abdeckkappe 47 öffnet der Schlitten oder Wagen 45 automatisch die erste und die zweite Klappe 49 bzw. 51 des Klappenmechanismus 36, so daß der Kamm 43 seine Abwurfstellung innerhalb der Abdeckkappe mit in den Zugang 52 verschwenkten Zähnen einnehmen kann. Danach kann der Schlitten oder Wagen 45 wieder in seine Ausgangsposition zurückbewegt werden.

Der Vollständigkeit halber wird noch darauf hingewiesen, daß die Verschwenkbarkeit des Kamms 43 gegenüber seinen Haltestegen 44 bei diesem Ausführungsbeispiel nur in dem Maß zugelassen sein muß, wie es für das Verschwenken des Kamms 43 längs der Auflauframpe 53 und in dem Zugang 52 hinein erforderlich ist. Der Schlitten oder Wagen 45 kann auch einfach als Schieber ausgebildet sein. Statt eines Kamms 43 kann auch ein Rechen oder eine Bürste verwendet werden.

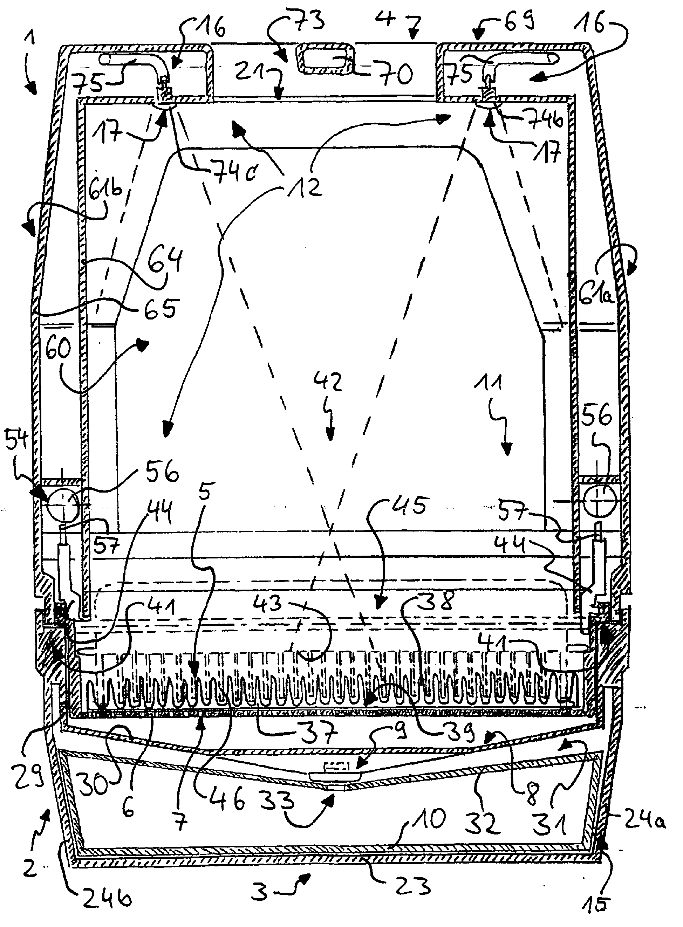

Bei dem in den Fig. 1 bis 4 gezeigten Ausführungsbeispiel sind Antriebseinrichtungen 54 vorgesehen, die in den Fig. 3 und 4 veranschaulicht sind, um den Schlitten oder Wagen 45 längs der Führungsschienen 41 zu bewegen.

Die Antriebseinrichtungen 54 enthalten einen elektrischen Antriebsmotor 55, der im Oberteil 4 untergebracht ist. In dem Oberteil 4 verlaufen zwei um ihre Längsachsen drehbare Gewindestangen oder -wellen 56 parallel und in Ausrichtung mit den Führungsschienen 41, wenn das Oberteil 4 auf das Unterteil 3 aufgesetzt ist. Weiterhin weist jeder Haltesteg 44 des Schlittens oder Wagens 45 einen Kopplungsfortsatz 57 auf, der, wenn das Oberteil 4 auf das Unterteil 3 aufgesetzt ist, in den Gewindegang 58 der jeweiligen Gewindestange 56 eingreift. Die beiden Gewindestangen 56 sind antriebsmäßig derart mit dem elektrischen Antriebsmotor 55 gekoppelt, daß sie sich beim Betrieb des letzteren mit denselben Rotationsgeschwindigkeiten drehen. Diese Drehung der Gewindestangen 56 hat wiederum zur Folge, daß die Haltestege 44 wegen der Eingriffe ihrer Kopplungsfortsätze 47 in die Gewindegänge 58 der Gewindestangen 56 linear längs der Führungsschienen 41 bewegt werden. Der Schlitten oder Wagen 45 kann somit, da der elektrische An- triebsmotor 55 in beiden Richtungen Drehbewegungen abgeben kann, längs der Führungsschienen 41 zwischen den beiden Schmalseiten 25a und 25b hin und her bewegt werden.

Diese Bauart hat u.a. den Vorteil, daß der Antriebsmotor 55 nicht mit dem Schlitten oder Wagen 45 mitbewegt werden muß, was zum einen bewegte Masse und zum anderen geeignete Anschlußkabel oder-schleifkontakte spart. Dadurch wird weniger Energie zur Bewegung des Schlittens oder Wagens 45 verbraucht und die Energieversorgung des Antriebsmotors 55 ist auf einfache Weise sichergestellt. Weiterhin kann das Oberteil 4 ohne weiteres vom Unterteil 3 abgenommen und wieder darauf aufgesetzt werden, ohne daß gesondert Verbindungen zwischen dem Antriebsmotor 55 und dem Schlitten oder Wagen 45 hergestellt werden müssen. Durch das bloße Aufsetzen des Oberteils 4 auf das Unterteil 3 kommen automatisch die Kopplungsfortsätze 57 an den Haltestegen 44 des Schlittens oder Wagens 45 mit den Gewindegängen 58 der Gewindestangen 56 in Eingriff, ohne daß es weiterer Handgriffe bedarf.

Um nach einem Aufsetzen des Oberteils 4 auf das Unterteil 3 die Funktion der Antriebseinrichtungen 54 möglichst eindeutig sicherzustellen, können Positionsdetektoren (nicht gezeigt) vorgesehen sein, die die auf das Unterteil 3 aufgesetzte Position des Oberteils 4 und/oder die Position des Schlittens oder Wagens 45 längs der Führungsschienen 41 feststellen. In Kombination mit der Steuerung 22, die beim vorliegenden Ausführungsbeispiel gemäß den Fig. 1, 2, 3 und 4 im Oberteil untergebracht ist, kann mittels der Detektoren z.B. festgestellt werden, daß das Oberteil 4 vom Unterteil 3 abgenommen und wieder darauf aufgesetzt wurde. Ein solcher Zustand kann eine Initialisierungsoperation auslösen, bei der der Antriebsmotor 55 betrieben wird, um den Schlitten oder Wagen 45 in eine Ausgangsposition zu bewegen, die auf der Seite der Schmalseite 25b liegt, wobei das Erreichen oder Innehaben dieser Ausgangsposition mittels Detektoren erfaßt wird, deren entsprechende Ausgangssignale die Steuerung 22 zum Abschalten des Antriebsmotors 55 veranlaßt. Alternativ kann aber auch die Position des Schlittens oder Wagens 45 längs der Führungsschienen 41 beim Aufsetzen des Oberteils 4 auf das Unterteil 3 direkt erfaßt werden und in Abhängigkeit von der erfaßten Position eine gezielte Rückführung des Schlittens oder Wagens 45 in die Ausgangsposition oder eine Fortsetzung einer vor dem Abnehmen des Oberteils 4 vom Unterteil 3 durchgeführten Operation, wie z.B. eines Abräumbetriebes, erfolgen. Die Steuerung 22 kann aber nach einer Detektion eines Wiederaufsetzens des Oberteils 4 auf das Unterteil 3 zuerst eine Bewegung des des Schlittens oder Wagens 45 in Richtung zur Abdeckkappe 47 hin durchführen, wo ein Detektor, wie beispielsweise ein Schalter, den Antriebsmotor 55 über die Steuerung 22 zum Umkehren der Antriebsrichtung veranlaßt, so daß der Schlitten oder Wagen 45 in die Ausgangsposition bei der Schmalseite 25b zurückgefahren wird.

Ohne Einschränkungen können die Komponenten der Antriebseinrichtungen 54 auch im Unterteil 3 angeordnet sein, wobei dann die Gewindestangen 56 unterhalb des Schlittens oder Wagens 45 liegen, der über geeignete Kopplungsfortsätze 57 mit den Gewindestangen 56 in Eingriff ist. Damit ist das Gewicht des Oberteils 4 zum leichteren Abnehmen geringer. Grundsätzlich ist es bei einer solchen Bauart auch möglich, daß die Kopplung des Schlittens oder Wagens 45 mit den Gewindestangen 56 über entsprechend dimensionierte Kopplungsfortsätze 57 mit Öffnungen (nicht gezeigt), erfolgt, durch die die Gewindestangen 56 hindurchgehen, so daß der Schlitten oder Wagen 45 fest mit den Gewindestangen 56 verbunden ist und nur an deren Enden von letzteren gelöst werden kann. Bevorzugt ist es jedoch auch bei der Version mit Gewindestangen im Unterteil 3, wenn die Kopplungsfortsätze 57 nur in die Gewindegänge 58 der Gewindestangen 56 eingreifen und so bei jeglicher Stellung des Schlittens oder Wagens 45 eine Lösung von den Gewindestangen 56 ermöglichen, da dadurch auch auf einfache Weise ein Abnehmen und wieder Aufsetzen der Unterlage 6 von der bzw. auf die Flüssigkeitsableiteinrichtung 8 möglich ist.

Bei dem vorliegenden Ausführungsbeispiel sind die Gewindestangen 56 mittels Zahnriemen 59 mit dem Antriebsmotor 55 verbunden. Dabei kommt es nicht darauf an, ob die beiden Gewindestangen 56 gleichsinnig oder gegensinnig angetrieben werden, da die Gewindegänge 58 entsprechend als Links- oder Rechtsgewinde ausgebildet sein können. Es kann in jedem Fall sichergestellt werden, daß beide Gewindestangen 56 mit nur einem Antriebsmotor angetrieben werden und für die beiden Haltestege 44 mit gleichen Umdrehungszahlen gleiche Vortriebe realisieren.

Es ist ferner möglich, den Kamm oder Rechen 43 der Kämm- oder Bürsteinrichtungen 42 gezielt an den Haltestegen 44 zu verschwenken, um beispielsweise bei einer Rückführung des Schlittens oder Wagens 45 dafür zu sorgen, daß die Zähne 46 des Kamms 43 oder Borsten einer entsprechenden Bürste (nicht gezeigt) von der Matte 37 abgehoben sind, um zu vermeiden, daß bei einer solchen Rückwärtsbewegung des Schlittens oder Wagens 45 in seine Ausgangsposition bei der Schmalseite 25b Fäkalien oder andere Teile sozusagen hinter dem Kamm 43 oder einer Bürste bleiben und so nicht mehr in den Sammelbehälter 13 gelangen können. Ein entsprechendes Verschwenken des Kamms 43 kann beispielsweise dadurch erreicht werden, daß längs der Führungsschienen 41 Leisten (nicht gezeigt), verlaufen, die eine größere Breite als Höhe haben und um ihre Längsausdehnung schwenkbar sind. Die Höhe solcher Leisten wäre dann so zu bemessen, daß der Kamm 43 nicht verschwenkt ist, wenn die Leisten mit ihrer Höhe in Vertikalrichtung auf den Kamm 43 einwirken. Sind die Leisten gedreht, so daß sie auf den Kamm 43 mit ihrer Breite in Vertikalrichtung einwirken, die größer als ihre Höhe ist, so führt dies zum Anheben oder Verschwenken des Kamms 43. Andere Mechaniken zum Verschwenken oder Anheben des Kamms 43 während vorgegebener Bewegungsabschnitte- und/oder -richtungen sind möglich.

In dem Oberteil 4 der Katzentoilette 2 sind, wie bereits weiter vorne angegeben wurde, Spüleinrichtungen 16 mit Düseneinrichtungen 17 und Flüssigkeitszufuhreinrichtungen 18 integriert, die einen vom übrigen Oberteil abnehmbaren Flüssigkeitstank 19 sowie Pumpen- und Freigabeeinrichtungen 20 aufweisen. Ferner weist das Oberteil 4 Lüftungs- und/oder Trocknungsgebläseeinrichtungen 21 auf. Die Spüleinrichtungen 16 mit den Düseneinrichtungen 17 und den Flüssigkeitszüfuhreinrichtungen 18 sind ebenso, wie die Abräumeinrichtungen 11 mit der Steuerung 22 verbunden, die beim vorliegenden Ausführungsbeispiel gemäß den Fig. 1 bis 4 im Oberteil 4 untergebracht ist und die später näher erläutert wird.

Um eine bedarfsgerechte Ansteuerung der Reinigungseinrichtungen 12 mit den Abräumeinrichtungen 11 und den Spüleinrichtungen 16 zu gewährleisten, sind im Innenraum 60 der Katzentoilette 2 Sensoren 22a angeordnet, mittels denen eine Anwesenheit einer Katze (nicht gezeigt) im Innenraum 60 festgestellt werden kann. Solche Sensoren sind in vielfachen geeigneten Bau- und Funktionsarten bekannt und erhältlich, so daß darauf nicht weiter eingegangen wird. Lediglich exemplarisch können solche Sensoren auf Wärme, Bewegung, Gegenstände, Geräusche, Druck, bestimmte Materialien, wie z.B. Metall einer Tiermarkierung, etc. ansprechen.

Um im Oberteil 4 der Katzentoilette 2 neben dem Antriebsmotor 55 und den Gewindestangen oder -wellen 56 einschließlich einer Kraft- und Bewegungsübertragung dazwischen die Spüleinrichtungen 16 mit Düseneinrichtungen 17 und Flüssigkeitszufuhreinrichtungen 18 sowie die Steuerung 22 unterzubringen, ist das Oberteil 4 doppelwandig ausgebildet. Insgesamt ist das Oberteil 4 kastenförmig mit Längsseiten 61a und 61b, die bei auf dem Unterteil 3 aufgesetztem Oberteil 4 mit den Längsseitenwänden 24a bzw. 24b des Grundgehäuses 15 ausgerichtet sind. Weiterhin weist das Oberteil 4 entsprechend der Schmalseite 25b des Grundgehäuses 15 eine Schmalseite 62b auf. An der der Schmalseite 62b gegenüberliegenden Schmalseite 62a ist das Oberteil 4 offen, d.h. hat eine Eingangsöffnung 63, durch die ein Tier in den Innenraum 60 gelangen kann, wie am besten in der Fig. 1 zu sehen ist. Unten ist die Eingangsöffnung 63 durch die Abdeckkappe 47 der Abräumeinrichtungen 11 begrenzt. Somit kann ein Tier ohne daß es auf irgendwelche Mechaniken stößt in den Innenraum 60 der Sanitäreinrichtung 1 für Tiere gelangen.

Durch die doppelwandige Bauart des Oberteils 4 ist zwischen dessen Innenwandung 64 und dessen Außenwandung 65 Platz, um den Antriebsmotor 55, die Gewindestangen oder -wellen 56, eine Kraft- und Bewegungsübertragung zwischen letzteren, die Spüleinrichtungen 16 mit Düseneinrichtungen 17 und Flüssigkeitszufuhreinrichtungen 18 sowie die Steuerung 22 unterzubringen. Die Gewindestangen oder -wellen 56 sind längs den Längsseiten 61a und 61b des Oberteils zwischen dessen Innen- und Außenwandungen 64 bzw. 65 so untergebracht, daß die Kopplungsfortsätze 57 des Schlittens oder Wagens 45 in die Gewindegänge 58 eingreifen, wenn das Oberteil 4 auf das Unterteil 3 aufgesetzt ist. Der Antriebsmotor 55 ist im Bereich der Schmalseite 62b im unteren Bereich angeordnet, wie in der Fig. 3 auf der linken Seite zu erkennen ist. Im Bereich des Antriebsmotors 55 sind auch die Komponenten der Steuerung 22 untergebracht. Oberhalb des Antriebsmotors 55 ist ein vom übrigen Oberteil 4 abnehmbarer Flüssigkeitstank 19 der Flüssigkeitszufuhreinrichtungen 18 der Spüleinrichtungen 16 angeordnet. Zum einfachen Befüllen kann der Flüssigkeitstank 19 abgenommen, zu einem Wasseranschluß gebracht, dort befüllt und anschließend nach dem Zurückbringen zur Sanitäreinrichtung 1 für Tiere wieder an seinem Platz in das Oberteil 4 eingesetzt werden.

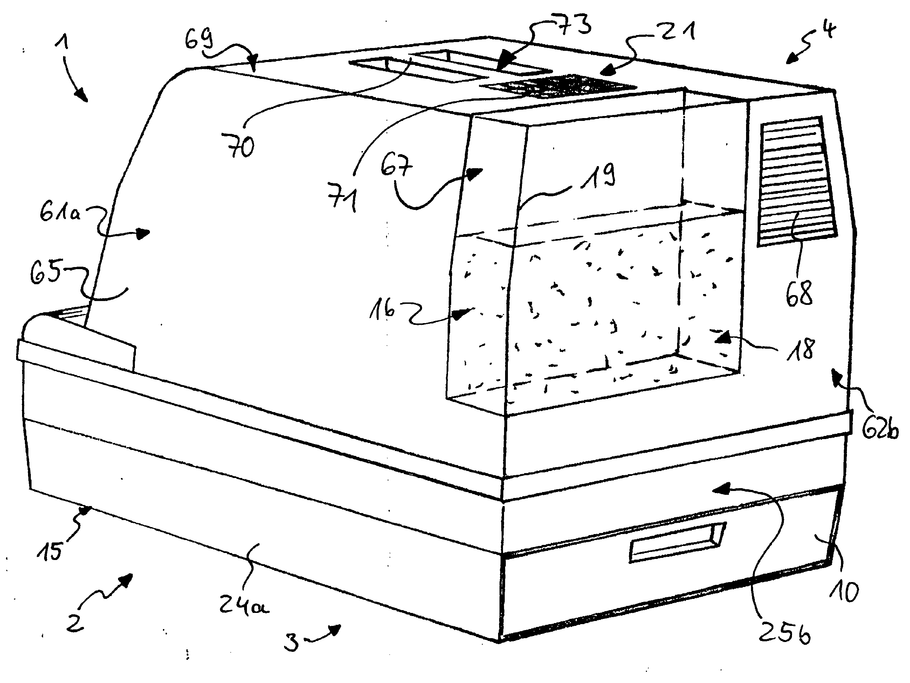

Der Flüssigkeitstank 19, der am besten in den Fig. 2 und 3 zu sehen ist, weist ein Ausgabeventil 66 auf, das sich, wenn der Flüssigkeitstank 19 vom übrigen Oberteil 4 abgenommen wird, automatisch verschließt. Wird der Flüssigkeitstank 19 wieder an seinem Platz im Oberteil 4 eingesetzt, so wird durch entsprechende Einrichtungen (nicht gezeigt) am Oberteil 4 das Ausgabeventil 66 automatisch geöffnet. Wie den Fig. 2 und 3 weiter zu entnehmen ist, weist das Oberteil 4 eine Aussparung 67 entsprechend der Form des Flüssigkeitstanks 19 auf, der in diese Aussparung paßt und dort mittels geeigneter Einrichtungen (nicht gezeigt) gehalten wird. In der Fig. 2 ist ferner zu erkennen, daß neben der Aussparung 67 Lüftungsschlitze 68 in der Außenwandung 65 enthalten sind, die der Temperaturregulierung des Antriebsmotors 55 dienen.

Das Oberteil 4 weist auch eine Deckseite 69 auf, in der ein Tragegriff 70 sowie Lüftungseinlässe 71 und Lüftungsauslässe 72 integriert sind, wobei die Lüftungsauslässe 72 innerhalb einer Griffmulde 73 des Tragegriffes 70 liegen, wie am besten in der Fig. 3 zu erkennen ist. Die Spüleinrichtungen 16 enthalten Düseneinrichtungen 17, die bei dem in den Figuren dargestellten Ausführungsbeispiel durch vier Düsen gebildet, von denen in den Schnittdarstellungen der Fig. 3 und 4 nur drei Düsen 74a, 74b und 74c zu sehen sind, und Flüssigkeitszufuhreinrichtungen 18 in Form von Leitungen 75, die zur Vereinfachung der Darstellungen in den Abbildungen nur teilweise gezeichnet sind. Die Leitungen 75 verlaufen von einem Anschluß 76 am Oberteil 4 für den Flüssigkeitstank 19 zwischen Innen- und Außenwandung 64 bzw. 65 des Oberteils 4 zu den vier Düsen (nur drei sind in den Fig. 3 und 4 gezeigt anhand der Bezugszeichen 74a, 74b und 74c) der Düseneinrichtungen 17. Der Anschluß 76 enthält die Pumpen- und Freigabeeinrichtungen 20, um die in dem Flüssigkeitstank 19 enthaltene Flüssigkeit gesteuert in die Leitungen 75 zu befördern.

Die Lüftungseinlässe 71 und Lüftungsauslässe 72 gehören neben einem Lüftungsgebläse 77 zu Lüftungs- und Trocknungsgebläseeinrichtungen 21 in dem Oberteil 4. Wie in der Schnittdarstellung der Fig. 3 zu erkennen ist, ist das Lüftungsgebläse 77 zwischen der Innenwandung 64 und der Außenwandung 65 des Oberteils den Lüftungseinlässen 71 zugeordnet angeordnet. Das Lüftungsgebläse 77 wird nach erfolgter Spülung mittels der Spüleinrichtungen 16 eingeschaltet und sorgt für eine möglichst rasche Trocknung der Aufnahmeschicht sowie für die Zufuhr von Frischluft in den Innenraum 60 des Oberteils 4. Um den Austritt unangenehmer Gerüche durch die Lüftungsauslässe 72 zu verhindern, können dort geeignete Mittel zur Geruchsfilterung vorgesehen sein.

Nachfolgend wird die Funktionsweise der erfindungsgemäßen Sanitäreinrichtung 1 für Tiere anhand des in den Fig. 1 bis 4 dargestellten Ausführungsbeispiels näher erläutert.

Die Steuerung 22 kann verschiedene Programme automatisch oder abrufbar enthalten, um geeignete Reinigungen der Sanitäreinrichtung 1 für Tiere durchzuführen. Standardmäßig kann beispielsweise vorgesehen sein, daß die Steuerung 22 den Aufenthalt eines Tiers im Innenraum 60 der Sanitäreinrichtung 1 für Tiere mittels der geeigneten Sensoren 22a feststellt. Dabei ist es z.B. möglich, daß eine erste Zeitsteuerung gestartet wird, sobald ein Tier im Innenraum 60 festgestellt wird. Verläßt das Tier den Innenraum 60 wieder vor Ablauf der ersten Zeitsteuerung, so wird die Steuerung wieder in den Anfangszustand versetzt, da davon auszugehen ist, daß das Tier in der entsprechend kurzen Zeit kein Geschäft verrichtet hat. Erst wenn das Tier länger als die der ersten Zeitsteuerung entsprechende Zeit im Innenraum 60 der Katzentoilette verweilt, wird, nachdem das Tier den Innenraum 60 verlassen hat, ein Reinigungsprogramm gestartet. Dabei ist es möglich, die Zeit zu wählen, um die verzögert das Reinigungsprogramm beginnt, nachdem das Tier den Innenraum 60 der Katzentoilette 2 verlassen hat. Es können voreingestellte Werte für eine solche Verzögerung zwischen 0 s und z.B. einigen Minuten wählbar sein, oder die Verzögerung kann zwischen 0 s und z.B. einigen Minuten insbesondere zumindest annähernd kontinuierlich einstellbar sein, um eine möglichst gute Anpassung der Sanitäreinrichtung 1 an das Tier zu ermöglichen, für das sie bestimmt ist.

Im Gegensatz zu früher bekannten Reinigungsvorrichtungen bei Katzentoiletten, die mit flüssigkeitsaufnehmendem Granulat - funktionieren, wofür eine Zeitverzögerung nach dem Verlassen der Katzentoilette durch das Tier unbedingt erforderlich ist, damit sich das herkömmliche Katzenstreu unter möglichst vollständiger Flüssigkeitsaufnahme sowie eventuell auch Feststoffbindung verklumpt, kann bei der vorliegenden Sanitäreinrichtung 1 für Tiere der Reinigungsvorgang unmittelbar beginnen, nachdem das Tier den Innenraum 60 der Sanitäreinrichtung 1 für Tiere verlassen hat. Aus Sicherheitsgründen und in Abhängigkeit von den Gewohnheiten des Tiers, für das die Sanitäreinrichtung 1 bestimmt ist, kann jedoch eine Zeitverzögerung vorgesehen und insbesondere einstellbar sein. Dadurch kann sichergestellt werden, daß der Abräum- oder Spülvorgang erst dann beginnt, wenn sich das Tier z.B. etwas von der Sanitäreinrichtung 1 für Tiere entfernt hat, so daß es nicht durch die Vorgänge und Geräusche des Abräum- oder Spülvorgangs verschreckt wird. Es kann ferner beispielsweise durch Einstellung eines um eine bestimmte Zeit verzögerten Startes des Abräum- oder Spülvorgangs gewährleistet werden, daß bei einer Rückkehr des Tiers in den Innenraum, kurz nachdem es letzteren nach Verrichtung seiner Geschäfte verlassen hat, das Tier nicht in den bereits gestarteten Reinigungsvorgang gelangt oder durch den bereits laufenden Abräum-, Spül- oder allgemein Reinigungsvorgang verschreckt wird. Es ist nämlich bei Tieren unbedingt darauf zu achten, daß sie die Sanitäreinrichtungen akzeptieren und benutzen, was nicht sichergestellt wäre, wenn ein Tier Angst vor den Sanitäreinrichtungen bekommt.

Darüber hinaus stellt die Steuerung 22 sicher, daß der Abräum- oder Spülvorgang nicht gestartet oder sofort unterbrochen wird, wenn sich vor oder nach seinem Beginn ein Tier in den Innenraum 60 begibt. Dies kann durch die Sensoren 22a festgestellt werden, mittels denen somit das Betreten, den Aufenthalt und das Verlassen eines Tieres detektiert werden kann.

Wenn ein Tier sein Geschäft in der Sanitäreinrichtung 1 verrichtet hat und die Steuerung 22 anhand von Signalen von den Sensoren 22a feststellt, daß ein Abräum- und Spülvorgang durchgeführt werden kann, veranlaßt die Steuerung 22 zunächst eine Aktivierung des Antriebsmotors 55 der Abräumeinrichtungen 11 der automatischen Reinigungseinrichtungen 12, um den Schlitten oder Wagen 45 aus seiner Ausgangsposition zur Abdeckkappe 47 des Klappenmechanismus 36 hin zu bewegen, wie weiter oben beschrieben wurde. Kot, der auf der Matte 37 oder dem Granulat (nicht gezeigt) der Aufnahmeschicht 5 liegt, wird dadurch in den Sammelbehälter 13 befördert. Danach wird der Schlitten oder Wagen 45 durch Umkehr der Antriebsrichtung wieder in seine Ausgangsposition zurückbewegt. In dem Sammelbehälter 13 kann ein geruchsbindendes oder -verhinderndes Mittel in Pulver- oder flüssiger Form enthalten sein, so daß die Verhinderung einer Geruchsbelästigung durch den Klappenmechanismus 36 noch weiter verbessert werden kann. Vorzugsweise ist ein solches geruchsbindendes oder -verhinderndes Mittel biologisch abbaubar und/oder über eine normale Haushaltstoilette entsorgbar.

Umfaßt die Aufnahmeschicht 5 ein Granulat, so sollten dessen Körnung und die darauf abgestimmten Abstände der zähen 46 des Kamms 43 o.ä. entsprechend dem Tier, für das die Sanitäreinrichtung 1 dient, so gewählt werden, daß sie kleiner als Kotteile sind, so daß der Kamm 43 zwar den Kot wegräumen kann, das Granulat (nicht gezeigt) aber glättet und nicht oder zumindest nicht wesentlich mitnimmt. Weiterhin kann der Kamm 43 o.ä. über die Breite der Aufnahmeschicht 5 linear oder beispielsweise leicht V-förmig geknickt oder ähnlich geschwungen sein, mit einem Vorsprung in Richtung auf die Abdeckkappe 47 hin, damit nicht nur in der Mitte Feststoffe in den Sammelbehälter 13 abgeworfen werden, sondern eine Verteilung der Feststoffe über die gesamte Breite des Sammelbehälters 13 erfolgt. Geeignete Formen lassen sich in Verbindung mit dem üblichen Kot des Tiers, für das die Sanitäreinrichtung 1 dient, ohne großen Aufwand gestalten und erproben.

Wird durch Steuerung 22 infolge von Signalen von den Sensoren 22a festgestellt, daß ein Spülvorgang ausgelöst werden muß, so veranlaßt die Steuerung 22, daß die Pumpen- und Freigabeeinrichtungen 20 Flüssigkeit aus dem Flüssigkeitstank 19 in die Leitungen 75 und damit automatisch zu den vier Düsen (nur drei sind in den Fig. 3 und 4 gezeigt anhand der Bezugszeichen 74a, 74b und 74c) befördert. Die Düsen 74a, 74b und 74c sind so gestaltet, daß sie ein Sprühmuster bilden, das die gesamte unter ihnen liegende Aufnahmeschicht 5 abdeckt. Entsprechende Ausgestaltungen von Düsen sind der Fachwelt bekannt, so daß hier nicht weiter darauf eingegangen wird. Mit der so zu den Düsen 74a, 74b und 74c zugeführten und davon auf die Aufnahmeschicht 5 abgegebenen Flüssigkeit wird die Aufnahmeschicht 5 von Urin- und Kotrückständen gereinigt oder abgewaschen. Eventuell kann auch der Schlitten oder Wagen 45 in eine Spülposition gebracht werden, so daß auch eventuell an den Zähnen 46 des Kamms 43 anhaftende Kotrückstände abgespült werden können.

Die Flüssigkeit, die von den Düseneinrichtungen 17 auf die Aufnahmeschicht 5 abgegeben wird, fließt unter Mitnahme von Fäkalienrückständen über die Noppen 38 der Matte 37 und durch deren Durchlaßlöcher 39 und die Flüssigkeitsdurchlässe 7 in der Unterlage 6 auf die Ableitplatte 30 der Flüssigkeitsableiteinrichtung B. Dort strömt die Flüssigkeit infolge der Gestaltung der Ableitplatte 30 automatisch zum Ablaß 9 der Flüssigkeitsableiteinrichtung 8, von wo aus sie ggf. mittels einer geeigneten Verbindung (nicht gezeigt) durch die Einlaßöffnung 33 in der Oberseite 32 des Auffangbehälters 10 in letzteren fließt, wenn dieser in seinem Aufnahmeraum 31 des Grundgehäuses 15 des Unterteils 3 aufgenommen ist. Die geschlossene Oberseite 32 des Auffangbehälters 10 verhindert ein Austreten unangenehmer Gerüche und das Risiko, den Auffangbehälter 10 beim Transport zu seiner Entleerung, beispielsweise in eine normale Toilette für Menschen, auszuschütten. Zum Entleeren des Auffangbehälters 10 kann dessen Oberseite 32 z.B. mittels einfacher mechanischer Mittel, wie beispielsweise durch einen mit einem Finger bedienbaren Hebel (nicht gezeigt), geöffnet werden, oder die Entleerung kann durch die Einlaßöffnung 33 in der Oberseite 32 des Auffangbehälters 10 erfolgen. Wenn die Oberseite 32 geöffnet werden kann, können entsprechende Dichteinrichtungen (nicht gezeigt) vorgesehen sein.

Auch beim Sammelbehälter 13 ist es möglich, einen Deckel (nicht gezeigt) vorzusehen, der ein Austreten unangenehmer Gerüche oder ein Risiko eines Ausschüttens beim Transport des Sammelbehälters 13 zum Entleeren verringert oder vermeidet. Ein solcher Deckel kann beispielsweise automatisch beim Herausziehen des Sammelbehälters 13 aus seinem Aufnahmeraum 35 im Grundgehäuse 15 entnommen wird, über den Sammelbehälter 13 geklappt oder geschoben werden. Aber auch ein von Hand aufsetzbarer Deckel kann mit denselben Vorteilen vorgesehen sein. Das Öffnen des Deckels zum Entleeren kann ähnlich dem Öffnen der Oberseite 32 des Aufnahmebehälters 10 oder auch anders gelöst sein.

Der Flüssigkeit kann bei Bedarf oder auf Wunsch beispielsweise Reinigungsmittel beigegeben werden, so daß auch hartnäckige Fäkalienrückstände leicht von der Aufnahmeschicht 5 entfernt und weggespült werden können. Es ist ferner möglich, die Flüssigkeit auf ihrem Weg vom Flüssigkeitstank 19 zu den Düseneinrichtungen 17 zu erwärmen, um einen besseren Reinigungseffekt zu erzielen. Außerdem ist es möglich, Einrichtungen vorzusehen, mittels denen das Sprühmuster beispielsweise zeitlich zyklisch verändert wird, um dieselben Stellen der Aufnahmeschicht 5 aus verschiedenen Winkeln zu besprühen und dadurch den Reinigungseffekt weiter zu verbessern. Um eine Geruchsbelästigung durch den Inhalt des Auffangbehälters 10 weiter zu verringern, wobei dies durch die geschlossene Bauart des letzteren bereits weitestgehend erfüllt ist, kann darin ein geruchsbindendes oder -verhinderndes Mittel in Pulver- oder flüssiger Form enthalten sein. Vorzugsweise ist ein solches geruchsbindendes oder -verhinderndes Mittel biologisch abbaubar und/oder über eine normale Haushaltstoilette entsorgbar.

Bei der Wahl eines Reinigungszusatzes zu der Flüssigkeit zum Spülen der Aufnahmeschicht 5 kann auch darauf geachtet werden, daß damit ein dem Tier, für das die Sanitäreinrichtung 1 bestimmt ist, angenehmer Geruch im Innenraum 60 der Sanitäreinrichtung 1 erzeugt wird. Damit kann die Bereitschaft des Tieres, die Sanitäreinrichtung 1 zu benutzen erhöht oder aufrechterhalten werden.

Der gesamte Reinigungsvorgang enthält damit ausgehend von einem Wartezustand der Reihe nach von der Steuerung 22 betrieben beispielsweise folgende Schritte für einen Normalbetrieb:
a) Feststellen, daß ein Tier den Innenraum 60 der Sanitäreinrichtung betreten hat;
b1) Feststellen, daß das Tier den Innenraum bereits nach so kurzer Zeit wieder verlassen hat, daß es kein Geschäft verrichtet haben kann, so daß keine Reinigung notwendig ist, und danach Zurücksetzen in den Wartezustand, bis das Tier den Innenraum erneut betritt; oder
b2) Feststellen, daß das Tier lange genug im Innenraum verweilte, um sein Geschäft zu verrichten, und Abwarten, bis das Tier den Innenraum wieder verläßt;
c) Feststellen, daß das Tier den Innenraum wieder verlassen hat und Abwarten einer bestimmten oder vorgebbaren Zeit, bis der Reinigungsvorgang gestartet wird;
d) Durchführen eines Abräumvorgangs durch Betrieb der Abräumeinrichtungen;
e) Durchführen eines Spülvorganges durch Betrieb der Spüleinrichtungen;
f) Durchführen eines Trochnungs- und Lüftungsvorganges durch Betrieb der Lüftungs- und Trocknungsgebläseeinrichtungen; und
g) Zurücksetzen des Reinigungsprogrammes in den Wartezustand.

Die Steuerung 22 kann darüber hinaus noch weitere Funktionen erfüllen. Beispielsweise kann sie mittels geeigneter Detektoren oder Sensoren im Auffangbehälter 10 und/oder Sammelbehälter 13 und/oder deren Aufnahmeräumen 31 bzw. 35 den Füllzustand von Auffangbehälter 10 und/oder Sammelbehälter 13 feststellen und bei Überschreiten einer vorgegebenen oder vorgebbaren Inhaltsmenge akustische und/oder optische Anzeigen aktivieren und evtl. sogar die Benutzung der Sanitäreinrichtung 1 für Tiere durch letztere unterbinden. Akustische und/oder optische Anzeigen können bereits bei Erreichen eines ersten Füllzustandes von Auffangbehälter 10 und/oder Sammelbehälter 13 aktiviert werden, bei welchem ersten Füllzustand eine weitere Benutzung der Sanitäreinrichtung 1 für Tiere durch letztere noch für eine gewissen Zeit möglich ist. Wird ein zweiter vollerer Füllzustand von Auffangbehälter 10 und/oder Sammelbehälter 13 erreicht oder überschritten, so kann beispielsweise eine Sperre (nicht gezeigt) ausgelöst werden. Eine solche Sperre kann z.B. durch eine automatische Absperrung der Eingangsöffnung 63 zum Innenraum 60 der Sanitäreinrichtung 1 für Tiere erreicht werden. Dies kann mittels Stäben oder einer Klappe (nicht gezeigt) erfolgen. Eine solche Absperrmöglichkeit (nicht gezeigt) hat grundsätzlich den weiteren Vorteil, daß die Sanitäreinrichtung 1 für Tiere auch zum Transport der letzteren geeignet ist, so daß nicht gesondert eine Transporteinrichtung und die Sanitäreinrichtung 1 für Tiere mitgenommen werden müssen, wenn das Tier verreisen oder transportiert werden soll. Geeignete Absperreinrichtungen können beispielsweise gleichzeitig als Rampe zum Betreten z.B. der Abdeckkappe 47 und letztlich des Innenraums 60 der Sanitäreinrichtung 1 für Tiere ausgebildet sein. Es ist ferner möglich, eine solche Rampe getrennt von eigentlichen Absperreinrichtungen der Eingangsöffnung 63 vorzusehen, wobei auch die angesprochenen Einrichtungen zur automatischen Absperrung der Eingangsöffnung 63, wenn der Auffangbehälter 10 und/oder Sammelbehälter 13 zu voll sind/ist, von Absperreinrichtungen verschieden sein können, mittels denen die Eingangsöffnung 63 z.B. für einen Transportfall verschlossen werden kann.

Durch geeignete Sensoren oder Detektoren kann auch der Füllzustand des Flüssigkeitstanks 19 überwacht werden, wobei auch hier z.B. bei Unterschreiten eines ersten Füllzustandes eine erste akustische und/oder optische Warnmeldung von der Steuerung 22 ausgelöst werden kann, worauf hin die Sanitäreinrichtung 1 für Tiere noch eine gewissen Zeit benutzt werden kann. Erst nach Unterschreiten eines zweiten Füllzustandes, der geringer als der erste Füllzustand ist, kann beispielsweise die Sanitäreinrichtung 1 für Tiere für eine weitere Benutzung gesperrt werden. Es können auch Einrichtungen vorgesehen werden, mittels denen ein zu geringer Füllzustand des Flüssigkeitstanks 19 behoben werden kann. Beispielsweise ist es möglich, ein Ventil (nicht gezeigt) in einer Zuleitung (nicht gezeigt) von einem normalen Wasserhahn (nicht gezeigt), der geöffnet ist, mittels der Steuerung 22 zum Nachfüllen des Flüssigkeitstanks 19 zu öffnen, wenn der Füllzustand in letzterem zu gering ist.

An die Steuerung 22 können auch Sensoren und/oder Detektoren angeschlossen sein, um den Füllzustand und/oder die Verteilung von Granulat über die Fläche der Aufnahmeschicht 5 zu überprüfen. Unter Umständen kann bei einem zu geringen Füllzustand neben akustischen und/oder optischen Signalen oder an deren Stelle ein Nachfüll- oder Verteilungsvorgang von der Steuerung 22 ausgelöst werden. Dazu sind entsprechende Vorrats- und Zufuhreinrichtungen bzw. Steuerungen (nicht gezeigt) der Abräumeinrichtungen 11 vorzusehen, die dann als Verteilungseinrichtungen fungieren. Hinsichtlich der Bewegungsmöglichkeiten der Abräumeinrichtungen 11 und deren Komponenten sowie deren Design wird auf die Darstellungen weiter vorne Bezug genommen.

Das Ausführungsbeispiel, das weiter vorne anhand der Zeichnung näher erläutert wurde, kann noch mit zahlreichen Weiterbildungen oder Alternativen versehen sein, die nachfolgend exemplarisch behandelt werden.

Wenn der Flüssigkeitstank 19 oberhalb der Düseneinrichtungen 17 liegt, kann auf Pumpeneinrichtungen 20 verzichtet werden, sofern der Flüssigkeitsdruck in dem Flüssigkeitstank 19 ausreicht, um die Reinigungsflüssigkeit geeignet durch die Düseneinrichtungen 17 zu drücken. In einem solchen Fall sind lediglich geeignete Freigabeeinrichtungen 20, wie z.B. Ventile, von der Steuerung 22 anzusteuern. Die Gravitationswirkung eines oberhalb der Düseneinrichtungen 17 liegenden Flüssigkeitstanks 19 kann aber auch zur Unterstützung der Pumpeneinrichtungen 20 einbezogen werden.

Das Material und/oder die Bauart des Oberteils 4 der Sanitäreinrichtung 1 für Tiere kann derart sein, daß mehr oder weniger Umgebungslicht in den Innenraum 60 der Sanitäreinrichtung 1 für Tiere fallen kann. Beispielsweise kann das Oberteil 4 ganz oder teilweise aus durchsichtigem Kunststoff bestehen.

Alternativ, zusätzlich oder teilweise können auch Geflechte oder Gitter o.ä. eingesetzt werden, die mehr oder weniger große Maschen o.ä. haben. In Abhängigkeit von dem Tier, für das die Sanitäreinrichtung 1 dient, und dessen Gewohnheiten insbesondere beim Verrichten seiner Geschäfte, kann das Oberteil 4 aber auch zumindest weitgehend lichtundurchlässig sein. Auch ist es möglich, die Eingangsöffnung 63 zum Innenraum 60 der Sanitäreinrichtung 1 für Tiere mit einer von letzteren zu öffnenden Klappe zu versehen. Ein Tier, das die Sanitäreinrichtung 1 benutzt, kann sich dadurch völlig ungestört fühlen.

Es ist bevorzugt, wenn möglichst alle Komponenten der Sanitäreinrichtung 1 für Tiere oder zumindest diejenigen Teile, mit denen ein die Sanitäreinrichtung 1 benutzendes Tier oder dessen Fäkalien in Kontakt kommt, aus abwaschbarem Material sind.

Die Antriebskomponenten der Abräumeinrichtungen 11 können vollständig im Unterteil 3 untergebracht sein, so daß ein zugehöriges abnehmbares Oberteil 4 ein geringeres Gewicht hat, was dessen Abnehmen vom Unterteil 3 erleichtert. Es kann aber auch von Vorteil sein, Komponenten mit einem gewissen Gewicht in dem Oberteil 4 unterzubringen, um dadurch zu vermeiden, daß das Oberteil 4 mit geringem Kraftaufwand, beispielsweise durch ein spielendes Tier, vom Unterteil gestoßen wird, so daß womöglich die gesamte Sanitäreinrichtung 1 für Tiere durch letztere nicht mehr benutzbar ist. Die Lagesicherung des Oberteils 4 auf dem Unterteil 3 kann jedoch auch durch entsprechende Verriegelungen, die in vielfältigen Ausgestaltungen aus dem entsprechenden Stand der Technik bekannt sind, erreicht werden.

Die Spüleinrichtungen 16 und insbesondere deren Düseneinrichtungen 17 können so ausgelegt sein, daß auch die Innenwandung 64 im Innenraum 60 der Sanitäreinrichtung 1 abgespült oder -gewaschen werden kann. Dadurch können auch Fäkalienreste oder anderer Schmutz an der Innenwandung 64 im Innenraum 60 entfernt werden.

Die schubladenartigen Auffang- und Sammelbehälter 10 bzw. 13 können in verschiedenen Größen einsetzbar sein. Von Vorteil ist es dabei, wenn die Grundplatte 23 derart gestaltet ist, daß sie einen Einschub von Auffang- und Sammelbehältern 10 bzw. 13 gestattet, die nach unten über die Grundplatte 23 hinaus vorstehen. So kann auf einfache Weise erreicht werden, daß ein größeres Reservoir (nicht gezeigt) z.B. für mehrere Tiere, die gemeinsam eine Sanitäreinrichtung 1 benutzen, oder bei einer längeren Abwesenheit der das Tier betreuenden Person, für die Aufnahme von Fäkalien und Reinigungsflüssigkeit mit Fäkalienresten zur Verfügung steht. Die Sanitäreinrichtung 1 wird durch entsprechende Auffang- und Sammelbehälter 10 bzw. 13 lediglich etwas höher, was, wenn das Tier, für das die Sanitäreinrichtung 1 bestimmt ist, die entsprechend höher liegende Eingangshöhe zur Eingangsöffnung 63 nicht erreichen kann, durch Verwendung einer bereits weiter oben erläuterten Zugangsrampe ergänzt oder ausgeglichen werden kann.

Es kann auch ein entsprechender Adapter zum Aufsetzen der Sanitäreinrichtung 1 für Tiere auf eine normale Toilette für Menschen integriert oder zusätzlich vorgesehen sein, wie etwa durch eine entsprechende Gestaltung der Grundplatte 23 bzw. ein geeignetes Zwischenstück. Erforderlichenfalls können zusätzlich geeignete Dichteinrichtungen ergänzt werden. Damit kann die Aufnahmekapazität für Tierfäkalien und verbrauchte Reinigungsflüssigkeit erhöht werden, da das Volumen der Menschentoilette zur Verfügung steht. In vorteilhafter Weise läßt sie diese Variante mit der bereits weiter oben angesprochenen Weiterbildung einer automatischen Nachfüllung des Flüssigkeitstanks 19 durch die Steuerung 22 mittels eines steuerbaren Anschlusses (nicht gezeigt) an einen normalen Wasserhahn (nicht gezeigt) kombinieren, der üblicherweise in der Nähe einer normalen Toilette für Menschen ist. Damit kann ein besonders langer Einsatz der Sanitäreinrichtung 1 für Tiere ohne ein Erfordernis einer Entleerung von Auffang- und Sammelbehälter 10 bzw. 13 sowie einer Nachfüllung des Flüssigkeitstanks 19 ermöglicht werden. Durch eine solche Ausführungsform kann zusätzlich der Aufwand zum Entleeren und Nachfüllen der jeweiligen Substanzen verringert werden.

An Stelle der Gewindestangen 56 können auch Zahnbänder oder einfache Keilriemen (nicht gezeigt) zur Bewegungs- und Kraftübertragung vom Antriebsmotor 55 auf den Schlitten oder Wagen 45 verwendet werden.

Im Inneren 60 der Sanitäreinrichtung 1 für Tiere kann ein Geruchsfilter oder ein Geruchsneutralisator (nicht gezeigt), wie beispielsweise ein sogenannter Deo-Stick, zum Einsatz kommen. Ähnliches kann durch entsprechende Zusätze zur Reinigungsflüssigkeit erreicht werden. Im letzteren Fall kann der Flüssigkeitstank über geeignete Abgabeeinrichtungen (nicht gezeigt) für solche Zusätze verfügen, um nicht so oft nachfüllen zu müssen und/oder eine konstante, nicht zu intensive Dosierung zu erhalten. Z.B. auf Katzen beruhigend oder anziehend wirkende Zusätze enthalten Baldrian.

Bei dem Auffang- und/oder Sammelbehälter 10 bzw. 13 können Einmal-Einsätze, wie z.B. Müllbeutel, vorgesehen sein, so daß eine Handhabung der Sanitäreinrichtung 1 für Tiere noch hygienischer erfolgen kann. Beim Auffangbehälter 10 kann beispielsweise eine sogenannte Faltflasche (nicht gezeigt) als Einmal-Einsatz verwendet werden, die einen stabilen Hals und einen beutelartigen Körper hat. Solche Einmal-Einsätze können aus biologisch abbaubarem oder sogar über Menschentoiletten zu entsorgendem Material sein.

Sämtliche Übergänge zwischen Teilen und Komponenten der Sanitäreinrichtung 1 für Tiere können durch geeignete Dichteinrichtungen, wie z.B. die bereits erwähnten und erläuterten Magnetgummis, abgedichtet sein, um Geruchs- oder Stoffaustritte zu vermeiden.

Bei dem in den Fig. 1 bis 4 gezeigten Ausführungsbeispiel ist das Oberteil 4 insgesamt doppelwandig ausgebildet, um Komponenten der Spül- und Antriebseinrichtungen 16 bzw. 54 unterzubringen. Material und damit Gewicht kann bei dem Oberteil 4 gespart werden, wenn nur eine einwandige Bauart verwendet wird. Zuleitungen, wie z.B. die Leitungen 75, vom Flüssigkeitstank 19 zu den Düseneinrichtungen 17 können im Innenraum 60 an dem Oberteil 4 verlegt oder angeformt sein. Für die Steuerung 22, den Antriebsmotor 55, die Gewindestangen 56 usw. können, soweit diese Komponenten dem Oberteil 4 zugeordnet sind, in letzterem geeignet dimensionierte und erforderlichenfalls geschlossene Aufnahmeräume (nicht gezeigt) angeordnet, ausgebildet oder integriert sein.

Um ein möglichst rückstandsfreies Abfließen der Reinigungsflüssigkeit von der Aufnahmeschicht 5 zu ermöglichen, können geeignete Oberflächengestaltungen der Matte 37 und ggf. des nicht flüssigkeitsaufnehmenden Granulats (nicht gezeigt) realisiert werden. Ein Merkmal hierfür besteht in möglichst glatten Oberflächen. Auch sollte das Material der Matte 37 und ggf. des nicht flüssigkeitsaufnehmenden Granulats nicht porös sein. Verbessert kann die Flüssigkeitsableitfähigkeit der Aufnahmeschicht 5 dadurch, daß einzelne Oberflächenteile der Matte 37 und ggf. des nicht flüssigkeitsaufnehmenden Granulats jedenfalls von oben nach unten gerundet sind. Die Flüssigkeitsableitung kann ferner durch entsprechende Zusätze für die Reinigungsflüssigkeit verbessert werden.

Bei den Komponenten, wie z.B. Kamm 43, Rechen oder Bürste, der Abräumeinrichtungen 11, die mit Tierfäkalien in Kontakt kommen, kann ebenfalls darauf geachtet werden, daß sie aus einem solchen Material bestehen oder zumindest solche Oberflächen(gestaltungen) aufweisen, an dem bzw. denen Tierfäkalien nicht haften bleiben. Die Steuerung 22 sorgt vorzugsweise dafür, daß beim Zurückfahren der Abräumeinrichtungen 11 in ihre Ausgangs- oder Warteposition gegenüberliegend der Abdeckkappe 47 der Spülvorgang bereits durchgeführt wird, dadurch wird der Zeitaufwand für den Reinigungsvorgang minimiert und gleichzeitig auch der Kamm 43 gereinigt werden. Alternativ oder zusätzlich kann die bereits weiter oben angesprochene Spülung auch dieser Komponenten vorgesehen sein. Diese Komponenten können auch als Wegwerfprodukte gestaltet sein, die nach einer gewissen Zeit einfach und kostengünstig ersetzt werden.

Es können ferner Wechselkämme oder ähnliches vorgesehen sein, um bestimmte Reinigungsaufgaben optimal ausführen zu können. Beispielsweise können auch rotierende Bürsten (nicht gezeigt) an Stelle eines Kamms 43 montierbar sein, wobei der Drehantrieb solcher Bürsten z.B. durch Kopplung mit der Bewegung des Schlittens, Schiebers oder Wagens 45 realisiert werden kann. Bei Kombination einer Abräumbewegung mit einem gleichzeitigen Spülen können Einrichtungen (nicht gezeigt) vorgesehen sein, die Spülflüssigkeit über einer sich drehenden Bürste auffangen und gezielt an oder auf die Bürste abgeben, so daß eine Intensivreinigung beispielsweise in Verbindung mit einem speziellen Reinigungszusatz automatisch durch gezielte Auslösung der Steuerung 22 für ein solches Programm durchgeführt werden kann. Geräte für Spezial- oder Intensivreinigungen können als Wegwerfprodukte oder wiederverwendbare Produkte eingesetzt werden.

Es ist auch grundsätzlich möglich, den Schlitten oder Wagen 45 an die Flüssigkeitszufuhreinrichtungen 18 anzuschließen und mit Düseneinrichtungen 17 zu versehen, um entsprechende Reinigungseffekte zu bewirken.

Die Kopplungsfortsätze 57 an den Haltestegen 44 des Kamms 43 können einfache Stifte (nicht gezeigt) sein, die ggf. durch Federeinrichtungen (nicht gezeigt) zu den Gewindestangen 56 hin vorgespannt sind, um immer einen optimalen Eingriff in die Gewindegänge 58 sicherzustellen. Es können auch mehrere in Längsrichtung der Gewindestangen 56 entsprechend den Gewindegängen 58 beabstandete Stifte, Zacken o.ä. (nicht gezeigt) als Kopplungsfortsätze 57 an den Haltestegen 44 des Kamms 43, Rechens, etc. angebracht sein, so daß eine Mehrzahl von Stiften, Zacken o.ä. gleichzeitig zur besseren und sichereren Kopplung der Haltestege 44 mit den Gewindestangen 56 in Eingriff ist. Die Kopplungsfortsätze 57 können auch zu den Gewindegängen 58 der Gewindestangen 56 passende Gewindeausbildungen (nicht gezeigt) zum Eingriff damit enthalten.

Es kann ferner eine Leitung (nicht gezeigt) vorgesehen sein, die bei einer bloßen Reinigung z.B. im Rahmen eines Intensivprogramms, einer Grundreinigung oder einer Erstreinigung den Ablaß 9 oder Auffangbehälter 10 mit dem Flüssigkeitstank 19 verbindet, so daß bei einer solchen Reinigung eingesetztes Reinigungsfluid im Kreislauf verwendet werden kann.

Es genügt grundsätzlich, wenn geeignete Sensoren 22a im Bereich der Eingangsöffnung 63 zum Innenraum 60 der Sanitäreinrichtung vorgesehen sind, um das Betreten, den Aufenthalt in und das Verlassen der Sanitäreinrichtung 1 durch ein Tier feststellen zu können. Es können aber auch im übrigen Innenraum 60 der Sanitäreinrichtung 1 wirkende Sensoren zu demselben Zweck vorgesehen sein.

In Abhängigkeit von der Art der Tierfäkalien, die in der Sanitäreinrichtung 1 auftreten können, kann auch auf die Abräumeinrichtungen 11 verzichtet werden. In den Tierfäkalien enthaltene Feststoffe werden dann mittels der Spüleinrichtungen 16 weggespült. Es ist ferner auch möglich, statt getrennten Auffang- und Sammelbehältern 10 bzw. 13 einen geeigneten gemeinsamen Behälter für feste und flüssige Ausscheidungen und Reinigungsflüssigkeit zu verwenden.

Die Lüftungs- und Trocknungsgebläseeinrichtungen 21 können auch in einem reinen Umluftbetrieb arbeiten. Für eine solche Bauart sind keine Lüftungsein- und -auslässe 71 bzw. 72 erforderlich.

Das Oberteil 4 kann sich über Auflagefalze (nicht gezeigt) auf dem Unterteil 3 abstützen.

Der Klappenmechanismus 36 zum Abführen der Feststoffe der Tierfäkalien kann jegliche andere geeignete Anordnung, Gestaltung und Funktion haben, als weiter oben im Zusammenhang mit dem in der Zeichnung angegebenen Ausführungsbeispiel angegeben wurde, wie ein Fachmann ohne weiteres zu erkennen vermag. Hierzu steht insbesondere eine Vielzahl anderer Schleusenmechanismen und -anordnungen aus dem fachmännischen Wissen und dem übrigen entsprechenden Stand der Technik zur Verfügung.

Bei einem Granulat, das keine Flüssigkeit aufnimmt, als Bestandteil der Aufnahmeschicht 5, kann ohne weiteres fehlerhaftes oder nicht funktionsfähiges Material entfernt und ersetzt werden. Es ist jedoch auch möglich, bei Verwendung einer Matte 37 diese als wegwerfprodukt zu gestalten. Dabei kann vorgesehen sein, die Matte 37 nach einer bestimmten Zeit und/oder einer bestimmten Benutzungsanzahl- oder -häufigkeit auszutauschen. Vorzugsweise bestehen solche Matten 37 aus recycelbarem oder biologisch abbaubarem Material. Die Matte 37, aber auch andere Kunststoffkomponenten der Sanitäreinrichtung 1 für Tiere kann bzw. können vorzugsweise aus recyceltem Material hergestellt sein.

Hinsichtlich der Beweglichkeit des Kamms 43 an seinen Haltestegen 44 wurden bereits weiter vorne einige Angaben gemacht. Der Kamm 43 oder Rechen oder eine entsprechende Bürste kann auch auf den Haltestegen 44 heb- und senkbar sein, wobei eine Vorspannung in eine angehobene oder abgesenkte Lage in Kombination mit entsprechenden Hebe- oder Absenkeinrichtungen (nicht gezeigt) vorteilhaft ist. Damit lassen sich weitere Funktionen bei der Sanitäreinrichtung 1 für Tiere realisieren, wie z.B. ein Verteilen und/oder Glätten von Granulat der Aufnahmeschicht 5.

Zum Antrieb der Abräumeinrichtungen 11 können statt des einen Antriebsmotors 55 mit den oder dem Zahnriemen 59 andere geeignete Mittel eingesetzt werden. Beispielsweise kann für jede Gewindestange 56 ein gesonderter Antriebsmotor vorgesehen sein, wobei die beiden Antriebsmotoren (nicht gezeigt) synchronisiert sind. Die Kopplung des Antriebsmotors 55 kann auch mittels Wellen erfolgen. Außer Betriebsarten des Antriebsmotors 55 in jeder seiner beiden Drehrichtungen kann auch vorgesehen sein, daß er verschiedene Antriebsgeschwindigkeiten bereitstellt, was durch verschiedene. Drehgeschwindigkeiten des Antriebsmotors 55 selbst oder entsprechende Getriebe mit verschiedenen Übersetzungsverhältnissen erreicht werden kann. Eine langsamere Antriebsgeschwindigkeit für den Schlitten oder Wagen 45 kann beispielsweise in Verbindung mit dem Einsatz einer sich drehenden Bürste, die bereits weiter oben erwähnt und erläutert wurde, an Stelle des Kamms 43 wünschenswert sein. Statt des Antriebsmotors 55 können auch jegliche anderen Arten von insbesondere Linearantrieben zum Einsatz kommen.

Für die Abräumeinrichtungen 11 können verschiedene Sensoren, wie z.B. Endschalter, vorgesehen sein, um einen reibungslosen, funktionssicheren und zweckgemäßen Betrieb zu ermöglichen. Insbesondere können auch Sensoren, wie z.B. Schalter, vorgesehen sein, die jeglichen Betrieb der Sanitäreinrichtung 1 für Tiere bei Wegnahme eines Teils oder bestimmter Teile sofort unterbinden oder unterbrechen. Je nach Art der Unterbindung oder Unterbrechung des Betriebs kann dann eine geeignete Initialisierung des Zustandes der Sanitäreinrichtung 1 für Tiere durch die Steuerung 22 durchgeführt werden.

Die Steuerung 22 kann durch weitere Komponenten und/oder Funktionen weitergebildet werden. Beispielsweise ist es möglich, daß die Steuerung 22 Eingabe- und/oder Anzeigeeinrichtungen (nicht gezeigt) enthält, mittels denen verschiedene Programm- oder Operationsmodi eingestellt bzw. angezeigt werden können. Die Eingabeeinrichtungen können Tasten und Wahlschalter (nicht gezeigt) enthalten. Als Anzeigeeinrichtungen können neben akustischen Signalgebern auch optische Anzeigen in Form von Lampen, Leuchtdioden und alphanumerischen Displays (nicht gezeigt) verwendet werden.

Mit der Steuerung 22 können neben den bereits weiter vorne angegebenen Programmen beispielsweise auch Abläufe, wie z.B. eine Grundreinigung, eine Zwischenreinigung, eine Reinigung vor einer Entnahme von Auffangbehälter 10 und/oder Sammelbehälter 13 zwecks deren/dessen Entleerung, eine Routinereinigung, eine zyklische Reinigung, etc. gesteuert werden. Die lediglich exemplarische aufgelisteten Reinigungsversionen können unterschiedliche zeitliche Abläufe und Zusammensetzungen hinsichtlich Spül- und Abräumvorgängen haben. Für konkrete Reinigungen kann es erforderlich oder empfehlenswert sein, zur Reinigungsflüssigkeit geeignete Zusätze hinzuzugeben oder Teile der Sanitäreinrichtung 1 für Tiere vorher zu entfernen, wie z.B. die Aufnahmeschicht 5 und die Unterlage 6. Einzelne Betriebs- oder Programmvarianten oder -modi können bei einmal in Betrieb genommener Steuerung 22 automatisch oder alternativ oder zusätzlich manuell ausgelöst werden. Anzeigeeinrichtungen (nicht gezeigt) können einen jeweils aktuell ablaufenden oder einen anstehenden oder manuell auszulösenden Betrieb anzeigen und eventuell sogar mittels einer Menüführung in Kombination mit Eingabeeinrichtungen (nicht gezeigt) vom Bediener individuell steuerbar machen. Die Steuerung 22 kann auch den Betriebsumfang einzelner Komponenten der Sanitäreinrichtung 1 für Tiere und insbesondere deren Reinigungseinrichtungen 12 überwachen, um erforderlichenfalls Wartungsinformationen zu erzeugen und anzuzeigen.

Im Fall von Zusätzen im Reinigungswasser zur Erzeugung von Gerüchen im Inneren 60 der Sanitäreinrichtung 1 für Tiere kann beispielsweise in vorgegebenen oder vorgebbaren Zeitintervallen eine kurze Spülung von der Steuerung 22 ausgelöst werden, um solche Gerüche aufzufrischen.

Die Steuerung 22 kann auch besonders energiesparend ausgelegt sein, indem sie üblicherweise in einem Bereitschaftszustand ist, aus dem sie durch Signale von den Sensoren 22a aktiviert wird. Auch die übrigen Komponenten der Reinigungseinrichtungen 12, wie z.B. der Antriebsmotor 55 und/oder die Pumpen- und Freigabeeinrichtungen 20 sowie Lüftungs- und Trocknungsgebläseeinrichtungen 21 können möglichst energiesparend ausgelegt sein, wozu entsprechende fachmännische Maßnahmen zur Verfügung stehen. So können z.B. die Pumpeneinrichtungen 20 nur bei Bedarf aktiviert werden und die Freigabeeinrichtungen 20 so ausgelegt sein, daß ihr abriegelnder Zustand ohne Energieverbrauch gehalten wird. Ein Betrieb elektrischer Einrichtungen kann durch einen Netzanschluß erforderlichenfalls über einen Adapter oder mittels Batterien erfolgen. Statt letzteren können auch aufladbare Akkumulatoren eingesetzt werden, die z.B. mit photovoltaischen Einrichtungen insbesondere auf der Deckseite 69 des Oberteils 4 zum Aufladen durch Licht kombiniert sein können. Eine bevorzugte Betriebsspannung für alle elektrisch funktionierenden Einrichtungen der Sanitäreinrichtung 1 für Tiere beträgt 12 V.

Eine kostengünstige, kleinbauende und umfassende Realisierungsmöglichkeit der Steuerung 22 besteht in einem insbesondere vorprogrammierten Computerchip (nicht gezeigt). Eventuell können für verschiedene Tierarten unterschiedliche Steuerprogramme in einem solchen Chip einzeln oder wählbar gespeichert werden. Weiterhin können an das Verhalten eines einzelnen Tiers angepaßte Programmabläufe abgespeichert werden.

Die Sanitäreinrichtung 1 für Tiere gemäß der Erfindung ermöglicht in jeglicher ihrer Ausgestaltungen im Rahmen dieser Unterlagen einen zumindest weitgehend automatischen bis vollautomatischen Betrieb. Es kann jedenfalls sichergestellt werden, daß Berührungen mit von Tierfäkalien möglicherweise verschmutzten und nicht bereits gereinigten Teilen vermieden werden, so daß diese Sanitäreinrichtung 1 höchsten Hygieneanforderungen von Mensch und Tier genügt. Die Betriebskosten sind, da es außer der Spülflüssigkeit und keinerlei Verbrauchsmaterial zwingend bedarf, sehr niedrig. Weiterhin wird ein Minimum an Abfall erzeugt, der zudem leicht zu entsorgen ist.

### Bezugszeichenliste

- 1: Sanitäreinrichtung
- 2: Katzentoilette
- 3: Unterteil
- 4: Oberteil
- 5: Aufnahmeschicht
- 6: Unterlage
- 7: Flüssigkeitsdurchlässe
- 8: Flüssigkeitsableiteinrichtung
- 9: Ablaß
- 10: Auffangbehälter
- 11: Abräumeinrichtungen
- 12: Reinigungseinrichtungen
- 13: Sammelbehälter
- 14: Zugangseinrichtungen
- 15: Grundgehäuse
- 16: Spüleinrichtungen
- 17: Düseneinrichtungen
- 18: Flüssigkeitszufuhreinrichtungen
- 19: Flüssigkeitstank
- 20: Pumpen- und Freigabeeinrichtungen
- 21: Lüftungs- und/oder Trocknungsgebläseeinrichtungen
- 22: Steuerung
- 22a: Sensoren
- 23: Grundplatte
- 24a,b: Längsseitenwände
- 25a,b: Schmalseiten
- 26: Griffeinrichtungen
- 27: Griffeinrichtungen
- 28: Steg
- 29: Rahmen
- 30: Ableitplatte
- 31: Aufnahmeraum
- 32: Oberseite
- 33: Einlaßöffnung
- 34: Abwurföffnung
- 35: Aufnahmeraum
- 36: Klappenmechanismus
- 37: Matte
- 38: Noppen
- 39: Durchlaßlöchern
- 40: Abräumöffnung
- 41: Führungsschienen
- 42: Kämm- oder Bürsteinrichtungen
- 43: Kamm
- 44: Haltesteg
- 45: Schlitten oder Wagen
- 46: Zähne
- 47: Abdeckkappe
- 48: Öffnung
- 49: erste Klappe
- 50: Dorn
- 51: zweite Klappe
- 52: Zugang
- 53: Auflauframpe
- 54: Antriebseinrichtungen
- 55: Antriebsmotor
- 56: Gewindestangen oder -wellen
- 57: Kopplungsfortsätze
- 58: Gewindegänge
- 59: Zahnriemen
- 60: Innenraum
- 61a,b: Langseiten
- 62a,b: Schmalseiten
- 63: Eingangsöffnung
- 64: Innenwandung
- 65: Außenwandung
- 66: Ausgabeventil
- 67: Aussparung
- 68: Lüftungsschlitze
- 69: Deckseite
- 70: Tragegriff
- 71: Lüftungseinlässe
- 72: Lüftungsauslässe
- 73: Griffmulde
- 74a,b,c: Düsen
- 75: Leitungen
- 76: Anschluß
- 77: Lüftungsgebläse

## Patentansprüche

1. Sanitäreinrichtung für Tiere, mit einer Aufnahmeschicht für Tierfäkalien und automatischen Reinigungseinrichtungen, wobei die automatischen Reinigungseinrichtungen (12) Spüleinrichtungen (16) zur Abgabe einer Spülflüssigkeit auf die Aufnahmeschicht (5) für Tierfäkalien enthalten, und wobei die Spüleinrichtungen (16) oberhalb der Aufnahmeschicht (5) für Tierfäkalien liegende Düseneinrichtungen (17) enthalten, durch welche eine Reinigungsflüssigkeit auf die Aufnahmeschicht (5) für Tierfäkalien sprühbar ist und Flüssigkeitszufuhreinrichtungen (18) aufweisen,
**dadurch gekennzeichnet,**
**daß** die Aufnahmeschicht (5) für Tierfäkalien eine Matte (37) mit einer genoppten Oberfläche enthält und aus einem Material besteht, das keine Flüssigkeit aufnimmt, daß die automatischen Reinigungseinrichtungen (12) Abräumeinrichtungen (11) zum Entfernen von auf/in der Aufnahmeschicht (5) für Tierfäkalien enthaltenen Fäkalien aufinreisen, daß die Abräumeinrichtungen (11) mittels eines Schlittens oder Wagens (45) und eines Antriebs (54) über die Aufnahmeschicht (5) für Tierfäkalien beweglich sind und daß der Schlitten oder Wagen (45) an die Flüssigkeitszufuhreinrichtungen (18) angeschlossen ist und mit den Düseneinrichtungen (17) versehen ist.

2. Sanitäreinrichtung für Tiere nach Anspruch 1,
**dadurch gekennzeichnet,**
**daß** die Flüssigkeitszufuhreinrichtungen (18) einen Flüssigkeitstank (19) enthalten.

3. Sanitäreinrichtung für Tiere nach Anspruch 2,
**dadurch gekennzeichnet,**
**daß** der Flüssigkeitstank (19) abnehmbar ist.

4. Sanitäreinrichtung für Tiere nach wenigstens einem der Ansprüche 1-3,
**dadurch gekennzeichnet,**
**daß** die Flüssigkeitszufuhreinrichtungen (18) Pumpeneinrichtungen enthalten.

5. Sanitäreinrichtung für Tiere nach wenigstens einem der Ansprüche 1 bis 4
**dadurch gekennzeichnet,**
**daß** die Flüssigkeitszufuhreinrichtungen (18) Freigabeeinrichtungen (20) enthalten.

6. Sanitäreinrichtung für Tiere nach wenigstens einem der Ansprüche 1-5,
**dadurch gekennzeichnet,**
**daß** die Spüleinrichtungen (16) abschaltbar sind.

7. Sanitäreinrichtung für Tiere nach wenigstens einem der Ansprüche 1 - 6,
**dadurch gekennzeichnet,**
**daß** die automatischen Reinigungseinrichtungen (12) Lüftungs- und/oder Trocknungsgebläseeinrichtungen (21) enthalten, die oberhalb der Aufnahmeschicht (5) für Tierfäkalien angeordnet sind.

8. Sanitäreinrichtung für Tiere nach wenigstens einem der Ansprüche 2 -7,
**dadurch gekennzeichnet,**
**daß** die Spüleinrichtungen (16), deren Düseneinrichtungen (17), die Flüssigkeitszufuhreinrichtungen (18), deren Flüssigkeitstank (19), Pumpen- oder Freigabeeinrichtungen (20), Lüftungs- und/oder Trocknungsgebläseeinrichtungen (21) einem oberhalb der Aufnahmeschicht (5) für Tierfäkalien angeordneten Oberteil (4) der Sanitäreinrichtung (1) für Tiere zugeordnet sind.

9. Sanitäreinrichtung für Tiere nach Anspruch 8,
**dadurch gekennzeichnet,**
**daß** das Oberteil (4) abnehmbar ist.

10. Sanitäreinrichtung für Tiere nach wenigstens einem der vorangehenden Ansprüche
**dadurch gekennzeichnet,**
**daß** die Aufnahmeschicht (5) für Tierfäkalien flüssigkeitsdurchlässig ist und auf einer Unterlage (6) angeordnet ist, die Flüssigkeitsdurchlässe (7) enthält, und daß unterhalb der Unterlage (6) ein Auffangbehälter (10) für Flüssigkeit vorgesehen ist.

11. Sanitäreinrichtung für Tiere nach Anspruch 10,
**dadurch gekennzeichnet,**
**daß** zwischen der Unterlage (6) und dem Auffangbehälter (10) eine Flüssigkeitsableiteinrichtung (8) vorgesehen ist, die so gestaltet ist, daß sie Flüssigkeit von jedem Ort der Unterlage zu wenigstens einem in der Flüssigkeitsableiteinrichtung (8) enthaltenen Ablaß (9) leitet, der in den Auffangbehälter (10) mündet.

12. Sanitäreinrichtung für Tiere nach Anspruch 11,
**dadurch gekennzeichnet,**
**daß** der Ablaß (9) eine Abdeckung des Auffangbehälters (10) bildet.

13. Sanitäreinrichtung für Tiere nach wenigstens einem der Ansprüche 10 -12,
**dadurch gekennzeichnet,**
**daß** der Auffangbehälter (10) als Schublade ausgebildet ist.

14. Sanitäreinrichtung für Tiere nach wenigstens einem der vorangehenden Ansprüche,
**dadurch gekennzeichnet,**
**daß** die Aufnahmeschicht (5) für Tierfäkalien, die Unterlage (6), der Auffangbehälter (10) sowie die Flüssigkeitsableiteinrichtung (8) einem Unterteil (3) der Sanitäreinrichtung (1) für Tiere zugeordnet sind.

15. Sanitäreinrichtung für Tiere nach wenigstens einem der vorhergehenden Ansprüche,
**dadurch gekennzeichnet,**
**daß** die Abräumeinrichtungen (11) Kämm- oder Bürsteinrichtungen (42) enthalten, die einen Zahn-/Bürstenabstand und eine Zahn-/Bürstenanordnung haben, die auf die genoppte Oberfläche der Matte (37) für Tierfäkalien abgestimmt sind.

16. Sanitäreinrichtung für Tiere nach den Ansprüchen 1 und 15,
**dadurch gekennzeichnet,**
**daß** den Abräumeinrichtungen (11) für die von/aus der Aufnahmeschicht (5) für Tierfäkalien entfernten Fäkalien ein Sammelbehälter (13) zugeordnet ist, der durch wenigstens eine Klappe (49; 51) verschlossen ist, deren Öffnung an den Betrieb der Abräumeinrichtungen (11) gekoppelt ist.

17. Sanitäreinrichtung für Tiere nach Anspruch 16,
**dadurch gekennzeichnet,**
**daß** der Sammelbehälter (13) mit zwei hintereinander geschalteten Klappen (49; 51) verschlossen ist.

18. Sanitäreinrichtung für Tiere nach Anspruch 16 oder 17,
**dadurch gekennzeichnet,**
**daß** die Kämm- oder Bürsteneinrichtungen (42) mechanisch mit der wenigstens einen Klappe (49) in Eingriff gelangt, um diese zu öffnen.

19. Sanitäreinrichtung für Tiere nach wenigstens einem der Ansprüche 16 - 18,
**dadurch gekennzeichnet,**
**daß** der Sammelbehälter (13) als Schublade ausgebildet ist.

20. Sanitäreinrichtung für Tiere nach wenigstens einem der vorhergehenden Ansprüche,
**dadurch gekennzeichnet,**
**daß** die Reinigungseinrichtungen (12) eine Steuerung (22) enthalten, um die Abräumeinrichtungen (11), die Spüleinrichtungen (16) und die Lüftungs- und/oder Trocknungsgebläseeinrichtungen (21) nach einer durch das Tier abgeschlossenen Benutzung der Sanitäreinrichtung (1) auszulösen und zu steuern, wobei die Steuerung (22) Sensoren (22a) zum Erfassen eines Aufenthalts des Tieres auf/in der Sanitäreinrichtung (1) enthält und derart ausgebildet ist, daß sie erfaßt, wenn das Tier die Sanitäreinrichtung (1) verläßt, und danach die Abräumeinrichtungen (11) und anschließend die Spüleinrichtungen (16) auslöst.

21. Sanitäreinrichtung für Tiere nach den Ansprüchen 7 und 20 sowie wenigstens einem der Ansprüche 1 - 6, 8 - 19,
**dadurch gekennzeichnet,**
**daß** die Steuerung (22) derart ausgebildet ist, daß sie nach Erfassung, wenn ein Tier die Sanitäreinrichtung verläßt, die Abräumeinrichtungen (11), anschließend die Spüleinrichtungen (16) und abschließend die Lüftungs- und/oder Trocknungsgebläseeinrichtungen (21) auslöst.

22. Sanitäreinrichtung für Tiere nach wenigstens einem der Ansprüche 1 - 20,
**dadurch gekennzeichnet,**
**daß** die Steuerung (22) derart ausgebildet ist, daß sie nach Erfassung, wenn das Tier die Sanitäreinrichtung verläßt, alternativ lediglich die Spüleinrichtungen (16) auslöst.

23. Sanitäreinrichtung für Tiere nach wenigstens einem der Ansprüche 20 - 22,
**gekennzeichnet durch** eine Steuerung (22), die nach Erfassung, wenn das Tier die Sanitäreinrichtung (1) verläßt, die weiteren Funktionen der Sanitäreinrichtung (1) mit einer Zeitverzögerung auslöst.

24. Sanitäreinrichtung für Tiere nach Anspruch 20 und wenigstens einem der Ansprüche 1 - 19, 21 - 23,
**dadurch gekennzeichnet,**
**daß** die Steuerung (22) Sensoren (22) und Anzeigeeinrichtungen zum Feststellen bzw. Anzeigen eines Füllzustandes des Auffangbehälters (10) enthält.

25. Sanitäreinrichtung für Tiere nach Anspruch 20 und wenigstens einem der Ansprüche 1 - 19, 21 - 24,
**dadurch gekennzeichnet,**
**daß** die Steuerung (22) Sensoren (22) und Anzeigeeinrichtungen zum Feststellen bzw. Anzeigen eines Füllzustandes des Sammelbehälters (13) enthält.

26. Betriebsverfahren einer Sanitäreinrichtung für Tiere mit einer Aufnahmeschicht (5) für Tierfäkalien in Form einer Matte (37) mit einer genoppten Oberfläche aus einem Material, das keine Flüssigkeit aufnimmt, mit automatischen Reinigungseinrichtungen (12), umfassend Abräumeinrichtungen (11) zum Entfernen von auf/in der Aufnahmeschicht (5) für Tierfäkalien enthaltenen Fäkalien und an Flüssigkeitszufuhreinrichtungen (18) angeschlossene Düseneinrichtungen (17) oberhalb der Aufnahmeschicht (5) für Tierfäkalien, durch welche eine Reinigungsflüssigkeit auf die Aufnahmeschicht (5) für Tierfäkalien sprühbar ist, wobei die Abräumeinrichtungen (11) und die Düseneinrichtungen (17) mittels eines Schlittens oder Wagens (45) und eines Antriebs (54) über die Aufnahmeschicht (5) für Tierfäkalien bewegt werden, wenn nach einer Benutzung der Sanitäreinrichtung durch ein Tier eine automatische Reinigung der Sanitäreinrichtung (1) erfolgt, wobei die automatische Reinigung ein Abräumen und anschließendes Spülen der Aufnahmeschicht (5) für Tierfäkalien mit der Reinigungsflüssigkeit umfaßt.

27. Betriebsverfahren nach Anspruch 26,
**dadurch gekennzeichnet,**
**daß** erfaßt wird, wenn das Tier die Sanitäreinrichtung (1) verlassen hat, und daß mit einer Zeitverzögerung danach die automatische Reinigung ausgeführt wird.

28. Betriebsverfahren nach Anspruch 26 oder 27,
**dadurch gekennzeichnet,**
**daß** die automatische Reinigung ein Abräumen, anschließendes Spülen und abschießendes Lüften und/oder Trocknen beinhaltet.

29. Betriebsverfahren nach Anspruch 26 oder 27,
**dadurch gekennzeichnet,**
**daß** die automatische Reinigung wahlweise nur aus einem Spülen der Aufnahmeschicht für Tierfäkalien besteht.

30. Betriebsverfahren nach wenigstens einem der Ansprüche 26-29,
**dadurch gekennzeichnet,**
**daß** ein Füllstand eines Flüssigkeitstanks (19) für die Reinigungsflüssigkeit als Bestandteil der Flüssigkeitszufuhreinrichtungen (18) überwacht wird.

31. Betriebsverfahren nach wenigstens einem der Ansprüche 26 - 30,
**dadurch gekennzeichnet,**
**daß** Flüssigkeiten durch die Aufnahmeschicht (5) für Tierfäkalien hindurch mittels einer Flüssigkeitsableiteinrichtung (8) in einen Auffangbehälter (10) geleitet werden.

32. Betriebsverfahren nach wenigstens einem der Ansprüche 26 - 31,
**dadurch gekennzeichnet,**
**daß** feste Fäkalienteile mittels Abräumeinrichtungen (11) in einen Sammelbehälter (13) geräumt werden.

33. Betriebsverfahren nach wenigstens einem der Ansprüche 26 - 32,
**dadurch gekennzeichnet,**
**daß** ein Füllzustand des Auffangbehälters (10) überwacht wird.

34. Betriebsverfahren nach wenigstens einem der Ansprüche 26 - 33,
**dadurch gekennzeichnet,**
**daß** ein Füllzustand des Sammelbehälters (13) überwacht wird.

35. Betriebsverfahren nach wenigstens einem der Ansprüche 26 - 34,
**dadurch gekennzeichnet,**
**daß** Tierfäkalien durch Entnahme und Ausleeren eines schubladenartigen Auffangbehälters (10) für flüssige Fäkalien und Reinigungsflüssigkeit entfernt werden.

36. Betriebsverfahren nach wenigstens einem der Ansprüche 26 - 35,
**dadurch gekennzeichnet,**
**daß** Tierfäkalien durch Entnahme und Entleeren eines Sammelbehälters (13) für feste Fäkalienteile entfernt werden.

37. Betriebsverfahren nach wenigstens einem der Ansprüche 26 - 36,
**dadurch gekennzeichnet,**
**daß** bei festgestelltem Unwohlsein des Tiers, für das die Sanitäreinrichtung (1) dient, zusätzlich flüssigkeitsaufnehmendes Streu oder Granulat verwendet wird, das bei Flüssigkeitsaufnahme aus den Fäkalien klumpt, wonach entstandene Klumpen beim Abräumen entfernt werden, und wobei das Spülen für einen solchen Betrieb abgeschaltet wird.

## Claims

1. Pet toilet, with an absorption layer for animal excreta and with automatic cleaning equipment, the said automatic cleaning equipment (12) comprising flushing equipment (16) for dispensing a flushing liquid onto the absorption layer (5) for animal excreta, the said flushing equipment (16) comprising a nozzle array (17) above the absorption layer (5) for animal excreta through which a cleaning liquid can be sprayed onto the absorption layer (5) for animal excreta, and also comprising liquid feed equipment (18),
**characterised in that**
the absorption layer (5) for animal excreta comprises a mat (37) with a burled surface and consists of a material that does not absorb liquids, the automatic cleaning equipment (12) comprises removal means (11) for the clearing of excreta on or in the absorption layer (5) for animal excreta, the said removal means (11) can be moved by a sliding support or carriage (45) and a drive mechanism (54) over the absorption layer (5) for animal excreta, and the sliding support or carriage (45) is connected to the liquid feed equipment (18) and carries the said nozzle array (17).

2. Pet toilet according to Claim 1,
**characterised in that**
the liquid feed equipment (18) comprises a liquid reservoir tank (19).

3. Pet toilet according to Claim 2,
**characterised in that**
the liquid reservoir tank (19) is removable.

4. Pet toilet according to at least on of Claims 1 to 3,
**characterised in that**
the liquid feed equipment (18) comprises pumping devices (20).

5. Pet toilet according to at least one of Claims 1 to 4,
**characterised in that**
the liquid feed equipment (18) comprises release devices (20).

6. Pet toilet according to at least one of Claims 1 to 5,
**characterised in that**
the flushing equipment (16) can be turned off.

7. Pet toilet according to at least one of Claims 1 to 6,
**characterised in that**
the automatic cleaning equipment (12) comprises ventilation and/or drying fans (21) arranged above the absorption layer (5) for animal excreta.

8. Pet toilet according to at least one of Claims 2 to 7,
**characterised in that**
the flushing equipment (16) and its nozzle array (17), the liquid feed equipment (18) and its liquid tank (19), pumps or release devices (20) and the ventilation and/or drying fans (21) are associated with an upper part (4) of the pet toilet (1), above the absorption layer (5) for animal excreta.

9. Pet toilet according to Claim 8,
**characterised in that**
the said upper part is removable.

10. Pet toilet according to at least one of the preceding claims,
**characterised in that**
the absorption layer (5) for animal excreta is permeable by liquids and is arranged over an underlay (6) which has openings (7) to allow the passage of liquids, and a receiving container (10) for liquids is provided underneath the underlay (6).

11. Pet toilet according to Claim 10,
**characterised in that**
between the underlay (6) and the receiving container (10) a liquid draining tray (8) is provided, which is designed such that it carries liquid from anywhere in the underlay (6) to at least one drain outlet (9) in the draining tray (8) that opens into the receiving container (10).

12. Pet toilet according to Claim 11,
**characterised in that**
the drain outlet (9) forms a cover for the receiving container (10).

13. Pet toilet according to at least one of Claims 10 to 12,
**characterised in that**
the receiving container (10) is made as a drawer.

14. Pet toilet according to at least one of the preceding claims,
**characterised in that**
the absorption layer (5) for animal excreta, the underlay (6), the receiving container (10) and the draining tray (8) are associated with a lower part (3) of the pet toilet (1).

15. Pet toilet according to at least one of the preceding claims,
**characterised in that**
the removal means (11) comprise comb or brush devices (42), which have a tooth or bristle separation and a tooth or bristle arrangement matched to the burled surface of the mat (37) for animal excreta.

16. Pet toilet according to Claims 1 and 15,
**characterised in that**
a collecting container (13) is associated with the removal means (11) for animal excreta from or out of the absorption layer (5) for animal excreta, which is closed by at least one flap (49; 51) that opens in association with the operation of the removal means (11).

17. Pet toilet according to Claim 16,
**characterised in that**
the collecting container (13) is closed by two flaps (49; 51) attached one behind the other.

18. Pet toilet according to Claims 16 or 17,
**characterised in that**
the comb or brush devices (42) engage mechanically with the at least one flap (49) in order to open the latter.

19. Pet toilet according to at least one of Claims 16 to 18,
**characterised in that**
the collecting container (13) is made as a drawer.

20. Pet toilet according to at least one of the preceding Claims,
**characterised in that**
the cleaning equipment (12) comprises a control unit (22) to start up and control the removal means (11), the flushing equipment (16) and the ventilation and/or drying fans (21) when the animal has finished using the toilet (1), such that the said control unit (22) comprises sensors (22a) to detect the presence of the animal on or in the toilet (1) and is constructed in such manner that it detects when the animal leaves the toilet (1) and thereafter starts up the flushing equipment (16).

21. Pet toilet according to Claims 7 and 20 and at least one of Claims 1 to 6 and 8 to 19,
**characterised in that**
the control unit (22) is constructed in such manner that after detecting when an animal has left the toilet, it starts up the removal means (11), then the flushing equipment (16) and finally the ventilation and/or drying fans (21).

22. Pet toilet according to at least one of Claims 1 to 20,
**characterised in that**
the control unit (22) is constructed in such manner that after detecting when the animal has left the toilet, it alternatively starts up only the flushing equipment (16).

23. Pet toilet according to at least one of Claims 20 to 22,
**characterised in that**
it comprises a control unit (22) which, after detecting when the animal has left the toilet (1), it starts up the other functions of the toilet after a time delay.

24. Pet toilet according to Claim 20 and at least one of Claims 1 to 19 and 21 to 23,
**characterised in that**
the control unit (22) comprises sensors (22) and a display device to detect and indicate the fullness condition of the receiving container (10).

25. Pet toilet according to Claim 20 and at least one of Claims 1 to 19 and 21 to 24,
**characterised in that**
the control unit (22) comprises sensors (22) and a display device to detect and indicate the fullness condition of the collecting container (13).

26. Operating method for a pet toilet, with an absorption layer (5) for animal excreta in the form of a mat (37) with a burled surface made of a material that does not absorb liquids, with automatic cleaning equipment (12) comprising removal means (11) for the clearing of animal excreta on or in the absorption layer (5) for animal excreta, and a nozzle array (17) connected to liquid feed equipment (18) above the absorption layer (5) for animal excreta, by means of which a cleaning liquid can be sprayed onto the absorption layer (5) for animal excreta, such that the removal means (11) and the nozzle array (17) are moved over the absorption layer (5) for animal excreta by a sliding support or carriage (45) and a drive mechanism (54) when automatic cleaning of the toilet takes place after an animal has used the toilet (1), the automatic cleaning process comprising the clearing and subsequent flushing of the absorption layer (5) for animal excreta with the cleaning liquid.

27. Operating method according to Claim 26,
**characterised in that**
it is detected when the animal has left the toilet (1) and, after a time delay, the automatic cleaning is carried out

28. Operating method according to Claims 26 or 27,
**characterised in that**
the automatic cleaning involves clearing followed by flushing and then ventilation and/or drying.

29. Operating method according to Claims 26 or 27,
**characterised in that**
optionally, the automatic cleaning can consist only of flushing the absorption layer for animal excreta.

30. Operating method according to at least one of Claims 26 to 29,
**characterised in that**
The fullness of a liquid reservoir tank (19) for the cleaning liquid is monitored as part of the liquid feed system (18).

31. Operating method according to at least one of Claims 26 to 30,
**characterised in that**
liquids passing through the absorption layer (5) for animal excreta are drained into a receiving container (10) by means of a liquid draining tray (8).

32. Operating method according to at least one of Claims 26 to 31,
**characterised in that**
solid excreta are cleared into a collecting container (13) by the removal means (11).

33. Operating method according to at least one of Claims 26 to 32,
**characterised in that**
the fullness of the receiving container (10) is monitored.

34. Operating method according to at least one of Claims 26 to 33,
**characterised in that**
the fullness of the collecting container (13) is monitored.

35. Operating method according to at least one of Claims 26 to 34,
**characterised in that**
animal excreta are removed by taking off and emptying a drawer-like receiving container (10) for liquid excreta and cleaning liquid.

36. Operating method according to at least one of Claims 26 to 35,
**characterised in that**
animal excreta are removed by taking off and emptying a collecting container (13) for solid excreta

37. Operating method according to at least one of Claims 26 to 36,
**characterised in that**
when it is recognised that the animal using the toilet (1) is unwell, additional liquid-absorbent litter material or granulate is used, which clumps together when it absorbs liquid from the excreta, after which any clumps are removed during clearing, the flushing function being turned off during such operation.

## Revendications

1. Equipement sanitaire pour animaux, comprenant une couche d'absorption pour des matières fécales animales et des dispositifs de nettoyage automatiques, les dispositifs de nettoyage automatiques (12) contenant des dispositifs de lavage (16) pour la distribution d'un liquide de lavage sur la couche d'absorption (5) pour des matières fécales animales, et les dispositifs de lavage (16) contenant des dispositifs à buse (17) situés au-dessus de la couche d'absorption (5) pour des matières fécales animales, par lesquels un liquide de nettoyage peut être pulvérisé sur la couche d'absorption (5) pour des matières fécales animales et qui présentent des dispositifs d'alimentation en liquide (18),
**caractérisé en ce que**
la couche d'absorption (5) pour des matières fécales animales contient un tapis (37) pourvu d'une surface nopée et est à base d'un matériau qui n'absorbe pas de liquide, **en ce que** les dispositifs de nettoyage automatiques (12) présentent des dispositifs d'évacuation (11) pour l'enlèvement de matières fécales contenues sur/dans la couche d'absorption (5) pour des matières fécales animales, **en ce que** les dispositifs d'évacuativn (11) peuvent être déplacés, au moyen d'un traîneau ou d'un chariot (45) et d'un actionneur (54), au-dessus de la couche d'absorption (5) pour des matières fécales animales et **en ce que** le traîneau ou chariot (45) est raccordé aux dispositifs d'alimentation en liquide (18) et est pourvu des dispositifs à buse (17).

2. Equipement sanitaire pour animaux selon la revendication 1,
**caractérisé en ce que**
les dispositifs d'alimentation en liquide (18) contiennent un réservoir de liquide (19).

3. Equipement sanitaire pour animaux selon la revendication 2,
**caractérisé en ce que**
le réservoir de liquide (19) est amovible.

4. Equipement sanitaire pour animaux selon au moins l'une des revendications 1 à 3,
**caractérisé en ce que**
les dispositifs d'alimentation en liquide (18) contiennent des dispositifs de pompage.

5. Equipement sanitaire pour animaux selon au moins l'une des revendications 1 à 4,
**caractérisé en ce que**
les dispositifs d'alimentation en liquide (18) contiennent des dispositifs de libération (20).

6. Equipement sanitaire pour animaux selon au moins l'une des revendications 1 à 5,
**caractérisé en ce que**
les dispositifs de lavage (16) peuvent être mis hors service.

7. Equipement sanitaire pour animaux selon au moins l'une des revendications 1 à 6,
**caractérisé en ce que**
les dispositifs de nettoyage automatiques (12) contiennent des dispositifs à soufflerie de ventilation et/ou de séchage (21), qui sont disposés au-dessus de la couche d'absorption (5) pour des matières fécales animales.

8. Equipement sanitaire pour animaux selon au moins l'une des revendications 2 à 7,
**caractérisé en ce que**
les dispositifs de lavage (16), leurs dispositifs à buse (17), les dispositifs d'alimentation en liquide (18), leur réservoir de liquide (19), les dispositifs de pompage ou de libération (20), les dispositifs à soufflerie de ventilation et/ou de séchage (21) sont associés à une partie supérieure (4), disposée au-dessus de la couche d'absorption (5) pour des matières fécales animales, de l'équipement sanitaire (1) pour animaux.

9. Equipement sanitaire pour animaux selon la revendication 8,
**caractérisé en ce que**
la partie supérieure (4) est amovible.

10. Equipement sanitaire pour animaux selon au moins l'une des revendications précédentes,
**caractérisé en ce que**
la couche d'absorption (5) pour des matières fécales animales est perméable aux liquides et est disposée sur un support (6), qui contient des passages de liquide (7), et **en ce qu'**un récipient collecteur (10) pour liquides est prévu au-dessous du support (6).

11. Equipement sanitaire pour animaux selon la revendication 10,
**caractérisé en ce que**
il est prévu, entre le support (6) et le récipient collecteur (10), un dispositif de déviation de liquide (8), qui est conçu de telle sorte qu'il dirige du liquide à partir de tout endroit du support vers au moins une sortie (9) incluse dans le dispositif de déviation de liquide (8), laquelle sortie débouche dans le récipient collecteur (10).

12. Equipement sanitaire pour animaux selon la revendication 11,
**caractérisé en ce que**
la sortie (9) forme une couverture du récipient collecteur (10).

13. Equipement sanitaire pour animaux selon au moins l'une des revendications 10 à 12,
**caractérisé en ce que**
le récipient collecteur (10) est réalisé comme un tiroir.

14. Equipement sanitaire pour animaux selon au moins l'une des revendications précédentes,
**caractérisé en ce que**
la couche d'absorption (5) pour matières fécales animales, le support (6), le récipient collecteur (10) et le dispositif de déviation de liquide (8) sont associés à une partie inférieure (3) de l'équipement sanitaire (1) pour animaux.

15. Equipement sanitaire pour animaux selon au moins l'une des revendications précédentes,
**caractérisé en ce que**
les dispositifs d'évacuation (11) contiennent des peignes ou des balais (42), qui présentent un écartement entre dents/balais et une disposition des dents/balais, qui sont adaptés à la surface nopée du tapis (37) pour des matières fécales animales.

16. Equipement sanitaire pour animaux selon les revendications 1 et 15,
**caractérisé en ce que**
aux dispositifs d'évacuation (11) pour les matières fécales enlevées de la couche d'absorption (5) pour des matières fécales animales est associé un récipient de ramassage (13), qui est fermé par au moins un clapet (49 ; 51), dont l'ouverture est couplée au fonctionnement des dispositifs d'évacuation (11).

17. Equipement sanitaire pour animaux selon la revendication 16,
**caractérisé en ce que**
le récipient de ramassage (13) est fermé avec deux clapets (49 ; 51) montés l'un derrière l'autre.

18. Equipement sanitaire pour animaux selon la revendication 16 ou 17,
**caractérisé en ce que**
les peignes ou balais (42) viennent en prise mécaniquement avec le au moins un clapet (49), afin de l'ouvrir.

19. Equipement sanitaire pour animaux selon au moins l'une des revendications 16 à 18,
**caractérisé en ce que**
le récipient de ramassage (13) est réalisé comme un tiroir.

20. Equipement sanitaire pour animaux selon au moins l'une des revendications précédentes,
**caractérisé en ce que**
les dispositifs de nettoyage (12) contiennent une commande (22) destinée à déclencher et à commander les dispositifs d'évacuation (11), les dispositifs de lavage (16) et les dispositifs à soufflerie de ventilation et/ou de séchage (21) après une utilisation, terminée par l'animal, de l'équipement sanitaire (1), la commande (22) contenant des capteurs (22a) pour la détection d'une présence de l'animal sur/dans l'équipement sanitaire (1) et étant conçue de telle sorte qu'elle détecte le moment où l'animal quitte l'équipement sanitaire (1), et déclenche ensuite les dispositifs d'évacuation (11), puis les dispositifs de lavage (16).

21. Equipement sanitaire pour animaux selon les revendications 7 et 20 et au moins l'une des revendications 1 à 6, 8 à 19,
**caractérisé en ce que**
la commande (22) est conçue de telle sorte que, après avoir détecté le moment où un animal quitte l'équipement sanitaire, elle déclenche les dispositifs d'évacuation (11), puis les dispositifs de lavage (16) et enfin les dispositifs à soufflerie de ventilation et/ou de séchage (21).

22. Equipement sanitaire pour animaux selon au moins l'une des revendications 1 à 20,
**caractérisé en ce que**
la commande (22) est conçue de telle sorte que, après avoir détecté le moment où l'animal quitte l'équipement sanitaire, elle déclenche comme alternative uniquement les dispositifs de lavage (16).

23. Equipement sanitaire pour animaux selon au moins l'une des revendications 20 à 22,
**caractérisé par** une commande (22) qui, après avoir détecté le moment où l'animal quitte l'équipement sanitaire (1), déclenche les autres fonctions de l'équipement sanitaire (1) avec une temporisation.

24. Equipement sanitaire pour animaux selon la revendication 20 et au moins l'une des revendications 1 à 19, 21 à 23;
**caractérisé en ce que**
la commande (22) contient des capteurs (22) et des dispositifs d'affichage pour la constatation et l'affichage d'un état de remplissage du récipient collecteur (10).

25. Equipement sanitaire pour animaux selon la revendication 20 et au moins l'une des revendications 1 à 19, 21 à 24,
**caractérisé en ce que**
la commande (22) contient des capteurs (22) et des dispositifs d'affichage pour la constatation et l'affichage d'un état de remplissage du récipient de ramassage (13).

26. Procédé d'exploitation d'un équipement sanitaire pour animaux comprenant une couche d'absorption (5) pour des matières fécales animales sous la forme d'un tapis (37) présentant une surface nopée en un matériau qui n'absorbe pas de liquide, des dispositifs de nettoyage automatiques (12), comprenant des dispositifs d'évacuation (11) pour l'enlèvement de matières fécales contenues sur/dans la couche d'absorption (5) pour des matières fécales animales et des dispositifs à buse (17) raccordés à des dispositifs d'alimentation en liquide (18), au-dessus de la couche d'absorption (5) pour des matières fécales animales, par lesquels un liquide de nettoyage peut être pulvérisé sur la couche d'absorption (5) pour des matières fécales animales, les dispositifs d'évacuation (11) et les dispositifs à buse (17) étant déplacés au moyen d'un traîneau ou d'un chariot (45) et d'un actionneur (54) au-dessus de la couche d'absorption (5) pour matières fécales animales lorsque, après une utilisation de l'équipement sanitaire par un animal, un nettoyage automatique de l'équipement sanitaire (1) s'effectue le nettoyage automatique comprenant une évacuation et un lavage consécutif de la couche d'absorption (5) pour des matières fécales animales avec le liquide de nettoyage.

27. Procédé d'exploitation selon la revendication 26,
**caractérisé en ce que**
le moment où l'animal a quitté l'équipement sanitaire (1) est détecté et **en ce que** le nettoyage automatique est exécuté ensuite avec une temporisation.

28. Procédé d'exploitation selon la revendication 26 ou 27,
**caractérisé en ce que**
le nettoyage automatique comprend une évacuation, un lavage consécutif et une ventilation et/ou un séchage final.

29. Procédé d'exploitation selon la revendication 26 ou 27,
**caractérisé en ce que**
le nettoyage automatique consiste au choix seulement en un lavage de la couche d'absorption pour matières fécales animales.

30. Procédé d'exploitation selon au moins l'une des revendications 26 à 29,
**caractérisé en ce que**
un niveau de remplissage d'un réservoir de liquide (19) pour le liquide de nettoyage est contrôlé en tant que constituant des dispositifs d'alimentation en liquide (18).

31. Procédé d'exploitation selon au moins l'une des revendications 26 à 30,
**caractérisé en ce que**
des liquides sont dirigés à travers la couche d'absorption (5) pour des matières fécales animales au moyen d'un dispositif de déviation de liquide (8), dans un récipient collecteur (10).

32. Procédé d'exploitation selon au moins l'une des revendications 26 à 31,
**caractérisé en ce que**
des parties solides de matières fécales sont évacuées, au moyen de dispositifs d'évacuation (11), dans un récipient de ramassage (13).

33. Procédé d'exploitation selon au moins l'une des revendications 26 à 32,
**caractérisé en ce que**
un état de remplissage du récipient collecteur (10) est surveillé.

34. Procédé d'exploitation selon au moins l'une des revendications 26 à 33,
**caractérisé en ce que**
un état de remplissage du récipient de ramassage (13) est surveillé.

35. Procédé d'exploitation selon au moins l'une des revendications 26 à 34,
**caractérisé en ce que**
des matières fécales animales sont enlevées par retrait et vidage d'un récipient collecteur (10) en forme de tiroir pour des matières fécales liquides et du liquide de nettoyage.

36. Procédé d'exploitation selon au moins l'une des revendications 26 à 35,
**caractérisé en ce que**
des matières fécales animales sont enlevées par retrait et vidage d'un récipient de ramassage (13) pour des parties solides de matières fécales.

37. Procédé d'exploitation selon au moins l'une des revendications 26 à 36,
**caractérisé en ce que**,
si l'on constate un mal-être de l'animal auquel sert l'équipement sanitaire (1), on utilise en supplément de la litière ou du granulé absorbant du liquide, qui s'agglutine en cas d'absorption de liquide provenant des matières fécales, après quoi les grumeaux formés sont enlevés lors de l'évacuation, sachant que le lavage est mis hors service pour une telle exploitation.
